# EUROPÄISCHE PATENTSCHRIFT

(11) **EP 2 839 733 B1**
(45) Veröffentlichungstag und Bekanntmachung des Hinweises auf die Patenterteilung: **13.04.2016**
(21) Anmeldenummer: 14173274.3
(22) Anmeldetag: 20.06.2014
(51) Int. Cl.: A01F 25/16, B65D 90/08, E04H 7/22, E04H 7/28

(54) **Fahrsilo**
Trench silo
Silo-couloirs

(30) Priorität: 21.06.2013 DE 202013102699 U
(43) Veröffentlichungstag der Anmeldung: 25.02.2015
(73) Patentinhaber: Schmack Biogas GmbH, 92421 Schwandorf (DE)
(72) Erfinder: Wolf, Markus, 92431 Neunburg v.W. (DE); Eckel, Rüdiger, 93059 Regensburg (DE)
(74) Vertreter: Glück Kritzenberger Patentanwälte PartGmbB

(56) Entgegenhaltungen:
- WO-A1-01/55515
- WO-A1-2006/030009
- DE-A1- 2 345 436
- DE-A1-102009 042 314
- DE-C- 826 639
- DE-U1-202012 011 676

## Beschreibung

### Techniques Gebiet

Die Erfindung betrifft ein Fahrsilo.

Zur Konservierung hochwertiger Futtermittel für Nutztiere oder nachwachsender Rohstoffe als Energiequelle für Biogasanlagen wird organisches Pflanzenmaterial wie zum Beispiel Gras, Mais, Zuckerrüben, Bohnen, diverse Getreidearten oder anderes durch Milchsäurevergärung zu einer so genannten Silage verarbeitet. Im Fachjargon wird dies auch als Silieren bezeichnet. Für den Siliervorgang werden die zu silierenden Futtermittel bzw. nachwachsenden Rohstoffe, also das Siliergut, in Silos, insbesondere in Fahrsilos eingebracht, aufgeschichtet, mittels Fahrzeugen verdichtet und anschließend näherungsweise luftdicht verschlossen, um den Gärprozess einzuleiten. Für einen möglichst kontrolliert ablaufenden Gärprozess bzw. Siliervorgang, können beim Einbringen, Aufschichten und Verdichten des Silierguts zusätzlich Siliermittel oder Silierhelfer beispielsweise in Form von Milchsäurebakterien zugesetzt werden.

Herkömmliche Fahrsilos werden in der Regel so errichtet, dass auf einem befestigten Untergrund, nämlich auf einer Sohle bzw. Bodenplatte, wie zum Beispiel einer Beton-, oder Teer- bzw. Asphaltdecke wenigstens zwei mittels Fundamenten im Untergrund verankerte Betonwände, häufig auch noch eine dritte die beiden anderen verbindende verankerte Betonwand, errichtet werden. Zwischen den Betonwänden wird dadurch ein Siloraum als Einlagerungsbereich für das Siliergut begrenzt. Die Betonwände weisen einen ausreichend großen Abstand zueinander auf, so dass sowohl die Beschickung des Siloraumes als auch die spätere Entnahme der Silage mit großen landwirtschaftlichen Nutzfahrzeugen oder anderen Lastwagen möglich ist und die Fahrzeuge beispielsweise zwischen den Wänden hindurch fahren können.

Bei der Beschickung eines Fahrsilos wird das eingebrachte Siliergut meist mit Traktoren oder mit Radladern aufgeschichtet und verdichtet, wobei in herkömmlichen Fahrsilos das Siliergut in etwa bis zur Höhe der Wände oder knapp darüber hinaus aufgeschichtet wird. Allein durch das eingelagerte Siliergut, vor allem jedoch durch die zum Verdichten des Silierguts verwendeten schweren Traktoren oder Radlader wird auf die Wände eines Fahrsilos ein enorm hoher Druck ausgeübt, dem die Wände stand halten müssen. Dazu werden die Wände eines Fahrsilos an ihren dem Siloraum abgewandten Außenseiten häufig zusätzlich gestützt, beispielsweise durch einen Wall aus Erdreich oder Baustoffen. Durch ein unglückliches Zusammentreffen von Witterungseinflüssen und Baustoffeigenschaften kann es bei leeren oder teilentleerten Fahrsilos gerade in solchen Fällen jedoch auch zu einem Gegendruck von außen nach innen kommen, welcher wiederum die Gefahr eines Umsturzes der Wände birgt. Die DE 10 2009 042 314 A1 beispielsweise versucht mit einer Silorückwandverankerung die Stabilität von Silowänden zu verbessern, wobei eine Silowandplatte eine Befestigungsvorrichtung mit Eingriffelementen aufweist, und derart mit einem abgesicherten Zuganker verbindbar ist, dass der Zuganker einem Kippen der Silowandplatte zur Innenseite entgegenwirkt. Eine derartige Konstruktion ist jedoch sehr aufwändig und in der Praxis allein aus Gelände- und Platzgründen häufig nicht realisierbar.

Ein weiteres Problem bezüglich der dauerhaften Stabilität von Silowänden stellt der so genannte Silage-Sickersaft dar, welcher während des Siliervorganges entsteht und pH-Werte bis hin zu pH 2 aufweist. Dieser saure, aggressive Silage-Sickersaft kann schädlichen Einfluss auf Bodenplatte oder Betonwände nehmen, weshalb in einem herkömmlichen Fahrsilo die Bodenplatte und die dem Siloraum bzw. dem Einlagerungsbereich zugewandten Innenseiten der Wände mit einem Bitumenanstrich versehen sind bzw. Abdichtungsfugen zwischen Silowänden und Bodenplatte eingebaut sind. Da der Silage-Sickersaft zudem nicht in den Boden oder ins Grundwasser gelangen darf und daher aufgefangen und zwischengelagert werden muss, weisen herkömmliche Fahrsilos zum Auffangen des Silage-Sickersaftes meist ein Gefälle zur Mitte hin auf, wo sich Ablaufrinnen, Gullys oder ähnliches befinden, in denen sich der Sickersaft sammeln soll und über entsprechende Rohrsysteme abgeleitet werden kann. Nachteilig an diesen herkömmlichen Ablaufsystemen für Silage-Sickersaft ist, dass ein mittiges Sammeln und Abfließen des Silage-Sickersaftes in der Praxis häufig nicht ausreichend funktioniert und der Sickersaft trotzdem an bzw. in Fugen und Nahtstellen in der Bodenplatte oder zwischen Bodenplatte und Wänden stehen bleibt. Fugen und Nahtstellen werden dadurch mit der Zeit undicht und der Silage-Sickersaft kann in die Fugen und Nahtstellen eintreten, so dass es im Laufe der Zeit zu einer Korrosion der Fundamentbewehrung kommt, was letztlich zu einer Instabilität der Fundamente führt und gegebenenfalls in einem Umsturz der Wände resultieren kann.

In diesem Zusammenhang erweist sich zusätzlich das auf der Abdeckplane eines Fahrsilos auftreffende Niederschlagswasser oder Kondensat als problematisch. Das Niederschlagswasser läuft über die Abdeckplane ab, trifft in der Regel in der Nähe der Wände und damit bei den Fugen bzw. Nahtstellen auf den Silage-Sickersaft und vermischt sich mit diesem. Dadurch erhöht sich die Menge der an Fugen bzw. Nahtstellen stehenden Flüssigkeit erheblich, die Wahrscheinlichkeit einer korrosiven Schädigung der Fundament- bzw. Wandbewehrung steigt. Hinzu kommt, dass ein unnötig vervielfachtes Volumen an kontaminierter Flüssigkeit fachgerecht entsorgt werden muss.

Zur Behebung des Problems wird beispielsweise durch die DE 20 2012 011 676 U1 ein Fahrsilo vorgeschlagen, bei dem die Wände oberseitig mit einer Rinne zum Abführen von Oberflächenwasser versehen sind und die Abdeckplane in den Rinnen festgelegt ist, so dass Niederschlagswasser getrennt vom Silage-Sickersaft abgeführt werden kann. Nachteilig an dem in der DE 20 2012 011 676 U1 beschriebenen Fahrsilo ist jedoch, dass der separate Regenwasserablauf in der Praxis nicht funktionieren wird, wenn das Silagematerial aufgrund der Gärprozesse zusammensackt und der Silagestand unter die Wandhöhe sinkt. Zudem wird in der Praxis die Handhabung der Abdeckplane nur sehr eingeschränkt möglich sein, wenn diese in einem Stück über mehrere Fahrsilokompartimente hinweg reicht.

Es besteht daher weiterhin Bedarf an Fahrsilos, welche die oben genannten Nachteile beheben. DE 826 639 offenbart einen Fahrsilo nach dem Oberbegriff des Anspruchs 1.

### Darstellung der Erfindung

Hier setzt die Erfindung an. Es soll ein neuartiges, mit geringem Baumaterialaufwand einfach herstellbares Fahrsilo mit einer funktionellen Silage-Sickersaft-Abführung aufgezeigt werden. Diese Aufgabe wird erfindungsgemäß durch das Fahrsilo gemäß Patentanspruch 1 gelöst. Weitere vorteilhafte Aspekte, Details und Ausgestaltungen der Erfindung ergeben sich aus den abhängigen Ansprüchen, der Beschreibung sowie der Zeichnungen.

Die Erfindung beschreibt ein Fahrsilo bestehend aus einer Bodenplatte und zumindest einer ersten und zweiten seitlichen Begrenzungswand, welche einen Einlagerungsbereich abgrenzen. Die Bodenplatte weist wenigstens ein erstes von einem höheren Niveaupunkt zu einem tieferen Niveaupunkt verlaufendes Gefälle in Richtung der ersten seitlichen Begrenzungswand auf. Zumindest die am tieferen Niveaupunkt des ersten Gefälles angeordnete, erste seitliche Begrenzungswand besteht aus einer Mehrzahl im Verband versetzt zueinander angeordneter Bauelemente, wobei die Bauelemente zumindest an ihrer dem Einlagerungsbereich und der Bodenplatte zugewandten Oberfläche aus einem säureresistenten, korrosionsbeständigen Material hergestellt sind. Wenigstens die zu der Bodenplatte benachbart angeordneten Bauelemente weisen auf ihrer der Bodenplatte zugewandten Unterseite die gebildete Begrenzungswand durchquerende Durchbrechungen für den Abfluss der in dem Einlagerungsbereich gebildeten Sickersäfte auf. Erfindungsgemäß weisen die eine Begrenzungswand bildenden Bauelemente an ihrer der Bodenplatte abgewandten Oberseite bevorzugt noppenartige Ausbuchtungen und/oder an ihrer der Oberseite gegenüberliegenden Unterseite Ausnehmungen auf, wobei die Ausnehmungen auf der Unterseite eines Bauelementes zur Aufnahme von noppenartigen Ausbuchtungen weiterer Bauelemente ausgebildet sind. Anzahl, Anordnung und geometrische Ausbildung der Ausnehmungen ermöglichen einen im Wesentlichen formschlüssigen Eingriff der noppenartigen Ausbuchtungen. Erfindungsgemäß ist zudem jede, aus einer Mehrzahl im Verband versetzt zueinander angeordneter Bauelemente bestehende, seitliche Begrenzungswand dabei bevorzugt aus zwei übereinander angeordneten Reihen von Bauelementen aufgebaut, wobei eine untere Reihe der Bauelemente zu der Bodenplatte benachbart angeordnet ist.

Unter dem in der vorliegenden Erfindung verwendeten Ausdruck "ein Gefälle in Richtung der seitlichen Begrenzungswand" wird verstanden, dass das Gefälle in abfallender Orientierung angegeben wird, nämlich ausgehend von einem höheren Niveaupunkt in Richtung zu einem niedrigeren bzw. tieferen Niveaupunkt. Der Ausdruck Niveaupunkt wird vorliegend als Lotabstand zu einer Ebene des Untergrundes, auf dem die Bodenplatte errichtet ist, verstanden, so dass ein höherer Niveaupunkt verglichen zu einem niedrigeren bzw. tieferen Niveaupunkt in einer größeren Höhe über der Ebene des Untergrundes zu liegen kommt.

Besonders vorteilhaft besteht bei dem erfindungsgemäßen Fahrsilo zumindest die erste seitliche Begrenzungswand aus einer Mehrzahl im Verband versetzt zueinander angeordneter Bauelemente, welche aufgrund ihrer eigenen Stabilität und Standfestigkeit einfach auf der Bodenplatte aufgesetzt sind, ohne über ein Fundament im Untergrund verankert werden zu müssen. Ebenso vorteilhaft sind die im Verband versetzt zueinander angeordneten Bauelemente weder untereinander noch mit der Bodenplatte über ein Bindemittel verbunden oder über ein Fugendichtungsmaterial gegeneinander abgedichtet, so dass kleinste Spalten, Zwischenräume oder Fugen an den Stoßflächen zwischen den einzelnen Bauelementen bzw. zwischen der Unterseite der Bauelemente und der Bodenplatte verbleiben, durch welche die im Einlagerungsbereich gebildeten Silage-Sickersäfte austreten können. Es versteht sich von selbst, dass in dieser einfachen Bauweise eine aus im Verband versetzt zueinander angeordneten Bauelementen bestehende seitliche Begrenzungswand mit vergleichsweise geringem Material- und Zeitaufwand erstellt werden kann. Der mauerartige Aufbau der seitlichen Begrenzungswand bringt gegenüber dem Stand der Technik zudem den Vorteil, dass einzelne Bauelemente im Falle einer Beschädigung leicht ausgetauscht werden können oder im Falle geänderter Anforderungen leicht durch Spezialelemente ersetzt werden können. Außerdem ist die Gefahr eines Umsturzes der gesamten Wand, nämlich über die ganze Länge eines Fahrsilos, sehr gering.

Unter dem in der vorliegenden Erfindung verwendeten Ausdruck "zu der Bodenplatte benachbart angeordnete Bauelemente" werden diejenigen Bauelemente verstanden, die zu der Bodenplatte am nächsten positioniert und somit in einer unteren Reihe von Bauelementen angeordnet sind. Die zu der Bodenplatte benachbart angeordneten Bauelemente können dabei zum Beispiel direkt auf der Bodenplatte aufliegen und in direktem, unmittelbaren Kontakt mit der Bodenplatte stehen. Es können jedoch zum Beispiel zur Erhöhung der Haftreibung beispielsweise auch dünne, flächig ausgebildete und aus geeigneten Materialien, wie zum Beispiel Hartgummi bestehende Materialstücke, wie Folien, Matten, Antirutschnetze oder dergleichen zwischen den zu der Bodenplatte benachbart angeordneten Bauelementen und der Bodenplatte eingeschoben sein, ohne den Umfang der vorliegend verstandenen Definition der "zu der Bodenplatte benachbart angeordneten Bauelemente" zu verlassen. Alternativ können die Bodenplatte und/oder die Unterseite der Bauelemente mit bestimmten körnigen Beschichtungen oder haftenden Lagen versehen sein. Beispielsweise kann auf die Bodenplatte im Bereich der seitlichen Begrenzungswände oberflächlich eine mit einer Hartkorneinstreu versehene Bitumenspur aufgebracht sein. Im Gegensatz zu den "zu der Bodenplatte benachbart angeordneten Bauelementen" einer unteren Reihe sind die nicht zu der Bodenplatte benachbart angeordneten Bauelemente immer auf unterhalb angeordneten Bauelementen aufgelagert und somit durch mindestens eine andere, untere Reihe von Bauelementen von der Bodenplatte beabstandet bzw. getrennt.

Durch die erfindungsgemäße Ausbildung der Bauelemente mit den noppenartigen Ausbuchtungen an ihrer der Bodenplatte abgewandten Oberseite und/oder den Ausnehmungen an ihrer der Oberseite gegenüberliegenden Unterseite, greifen bei den in einer Begrenzungswand im Verband versetzt zueinander angeordneten Bauelementen eine Anzahl noppenartiger Ausbuchtungen zweier Bauelemente einer unteren Reihe von Bauelementen in die Ausnehmungen eines einzelnen oberhalb versetzt angeordneten Bauelementes ein. Anzahl, Anordnung und geometrische Ausbildung der Ausnehmungen ermöglichen einen im Wesentlichen formschlüssigen Eingriff der noppenartigen Ausbuchtungen. Über die in die Ausnehmungen eingreifenden noppenartigen Ausbuchtungen können die Bauelemente, ähnlich den allgemein bekannten Kinderbausteinen, einfach zusammengesteckt werden, weshalb die Bauelemente vorliegend auch als Bausteine oder Systembausteine verstanden werden können. Durch das Zusammenstecken der im Verband versetzt zueinander angeordneten Bauelemente entsteht in sehr kurzer Zeit und auf einfachste Weise eine in sich stabile, feste, mauerartige Wand mit ausreichender Standfestigkeit. Da die einzelnen Bauelemente untereinander nicht zusätzlich mit einem Bindemittel oder dergleichen verbunden werden, müssen beim Aufbau einer seitlichen Begrenzungswand keine Aushärte- oder Trockenzeiten eingehalten werden, so dass beim Bau eines Fahrsilos die Begrenzungswände unmittelbar nach dem Aufbau der Bauelemente fertig und belastbar sind und das Fahrsilo unmittelbar nach Fertigstellung einsatzbereit ist.

Es wird darauf hingewiesen, dass bei den zu der Bodenplatte benachbart angeordenten Bauelementen einer unteren Reihe keine Ausnehmungen in der Unterseite und bei nach oben hin abschließenden Bauelementen einer oberen Reihe keine noppenartigen Ausbuchtungen an ihrer der Bodenplatte abgewandten Oberseite notwendig sind, um ein Zusammen- oder Ineinanderstecken der Bauelemente sicherzustellen und eine Begrenzungswand für ein erfindungsgemäßes Fahrsilo zu bilden. Solange gewährleistet ist, dass die Ausnehmungen und die noppenartigen Ausbuchtungen von ihrer Geometrie und Größe aufeinander abgestimmt sind, können die noppenartigen Ausbuchtungen grundsätzlich verschiedene geometrische Formen einnehmen, wobei pyramidenstumpf-, kegelstumpf- oder zylinderförmige Ausbuchtungen bevorzugt sind. In alternativen Ausführungsformen, können Ausnehmungen und Ausbuchtungen auch so aufeinander abgestimmt sein, dass der Formschluss nur in einer Dimension erfolgt. Beispielsweise können kreiszylinderförmige Ausbuchtungen in als Langlöcher ausgebildete Ausnehmungen eingreifen, wobei der Eingriff in einer Dimension formschlüssig ist und in der anderen Dimension einen gewissen Toleranzausgleich zulässt.

Die Bauelemente bestehen zumindest an ihrer Oberfläche aus einem säurefesten, korrosionsbeständigen Material. Beispielsweise sind die Bauelemente aus einem inerten Kunststoff, bevorzugt aus einem thermoplastischen Kunststoff, insbesondere bevorzugt aus Polyethylen oder Polypropylen hergestellt. Alternativ können zur Herstellung der Bauelemente auch Kunststoffhohlkörper, beispielsweise Hohlkörper aus Polyethylen oder Polypropylen eingesetzt werden, welche mit Beton oder anderen Füllmaterialien ausgegossen werden, um ausreichend Gewicht, Festigkeit und Stabilität zu erlangen. Die Kunststoffhohlkörper können dazu beispielsweise mittels eines geeigneten Verfahrens aus einem Polyethylen mittlerer Dichte (Medium-density Polyethylen; MD-PE) oder hoher Dichte (High-density Polyethylen, HD-PE) hergestellt sein, wobei die Wandstärke zwar möglichst gering gehalten jedoch ausreichend stark ist, damit die Kunststoffhohlkörper dem Druck des Füllmaterials standhalten. Idealerweise liegt die Wandstärke der als Kunststoffhohlkörper ausgebildeten Bauelemente in einem Bereich von rund 2 mm bis 6 mm. Zur Verbesserung der Stabilität und zur Versteifung können die als Kunststoffhohlkörper ausgebildeten Bauelemente zusätzlich an ihren Seitenflächen bzw. an der Oberseite oder den Stirnseiten beispielsweise längs, quer oder diagonal verlaufende rinnen- oder nutenförmige Vertiefungen in Form von Rillen bzw. Furchen oder Versteifungsrippen aufweisen.

Aus Kosten- und Verfahrensgründen bei der Herstellung der Bauelemente sind die Bauelemente vorzugsweise so ausgebildet, dass grundsätzlich zwei Grundformen von Bauelementen, nämlich Bauelemente zur Erstellung der unteren Reihe und Bauelemente zur Erstellung der oberen Reihe genügen. Durch die vorzugsweise jeweils in ihrer Längsrichtung symmetrisch aufgebauten Bauelemente ist es möglich, eventuell notwendige "Sonderbauelemente" wie "Randelemente" oder "Eckelemente", welche nur in sehr geringer Stückzahl benötigt werden, durch entsprechende nachträgliche Bearbeitung von Bauelementen der Grundform zu erhalten. Beispielsweise können solche "Sonderbauelemente" durch Zersägen von Bauelementen der Grundform und anschließendes Zusammenfügen der modifizierten Teile mit Techniken des Kunststoffschweißens erhalten werden. Die Bauelemente können in einer bevorzugten Ausführungsform mit entsprechend aufgebrachten Markierungslinien gekennzeichnet werden, um die Herstellung der Sonderbauformen auf diese Weise zu vereinfachen.

Sofern die Bauelemente in Form von Kunststoffhohlkörpern ausgebildet sind und es sich um Bauelemente handelt, welche an ihrer Oberseite mit noppenartigen Ausbuchtungen versehen sind, so können die noppenartigen Ausbuchtungen vorzugsweise gleichzeitig als Einfüllöffnung für das Füllmaterial und/oder als Belüftungsöffnung ausgebildet sein. In diesem Fall ist eine im Wesentlichen parallel zur Oberseite eines Bauelementes verlaufende Deckfläche der noppenartigen Ausbuchtungen durchbrochen ausgebildet und stellt somit eine Öffnung zur Verfügung. Die Durchbrechung oder Öffnung kann sich dabei über die gesamte Deckfläche der Ausbuchtung erstrecken, so dass ein derartiges Bauelement an seiner Oberseite lediglich einen angeformten, umlaufenden Ausbuchtungsrand oder einen angeformten, offenen Hohlschaft oder einen Stutzen aufweist. In der vorliegenden Erfindung fällt ein solcher Ausbuchtungsrand, Hohlschaft oder Stutzen unter den Begriff "noppenartige Ausbuchtung". Das Ausgießen der als Kunststoffhohlkörper ausgebildeten Bauelemente kann beispielsweise mit Ortbeton auf einer Baustelle vor Ort erfolgen, wobei bevorzugt ein Ortbeton mit einer dafür geeigneten Zusammensetzung und Konsistenz verwendet wird. Beispielsweise eignet sich ein gerade noch fließfähiger Beton der laut DIN-Norm 1045-2 mit seinem Konsistenzbereich "sehr weich" in eine so genannte Ausbreitmaßklasse F4 eingestuft ist. Bei Bauelementen ohne noppenartige Ausbuchtungen an ihrer Oberseite können anderweitige Öffnungen zum Einfüllen des Füllmaterials an der Oberseite vorhanden sein, welche vorzugsweise verschließbar ausgebildet sind.

Als weitere alternative Ausführungsform der Bauelemente können beispielsweise auch Betongusssteine mit einer außenseitig aufgebrachten säurefesten, korrosionsbeständigen Beschichtung dienen. Dazu werden Betongusssteine zum Beispiel mit einer Beschichtung aus Wasserglas, aus Epoxidharz oder aus Glasfaserkunststoff versehen.

Die Bodenplatte des Fahrsilos gemäß der vorliegenden Erfindung kann auch als Sohle oder als Silountergrund verstanden werden und ist bevorzugt in Form einer fugenlosen Asphaltfläche ausgebildet und erstreckt sich in ihrer Fläche über die seitlichen Begrenzungswände hinaus. Zumindest innerhalb des auch als Siloraum zu bezeichnenden Einlagerungsbereiches ist die Bodenplatte beispielsweise zweischichtig aufgebaut, wobei eine Tragschicht bevorzugt rund 14 cm und eine Deckschicht rund 4 cm stark ausgebildet sein können. Alternativ kann die Bodenplatte auch als Betonfläche ausgebildet sein, welche mit einem Bitumenanstrich bzw. mit einer Bitumenbeschichtung versehen ist.

Wie bereits erwähnt weist die Bodenplatte wenigstens ein erstes, von einem höheren Niveaupunkt zu einem tieferen Niveaupunkt verlaufendes Gefälle in Richtung der ersten seitlichen Begrenzungswand auf. Mit anderen Worten ausgedrückt, fällt die Bodenplatte zur ersten seitlichen Begrenzungswand hin ab. Vorzugsweise weist die Bodenplatte wenigstens innerhalb des Einlagerungsbereiches ein Gefälle in einem Größenordnungsbereich von rund 1,5 bis 5 %, bevorzugt in einem Bereich von rund 2 bis 3 % auf, so dass die während des Silierprozesses anfallenden Silage-Sickersäfte zu der ersten seitlichen Begrenzungswand hin fließen. Besonders vorteilhaft können aufgrund der erfindungsgemäßen Ausbildung der ersten seitlichen Begrenzungswand die Silage-Sickersäfte aus dem Einlagerungsbereich des Fahrsilos nach außen abgeführt werden. Die Durchbrechungen in den zu der Bodenplatte benachbart angeordneten Bauelementen der ersten seitlichen Begrenzungswand ermöglichen dabei einen ausreichend schnellen und effizienten Abfluss des Silage-Sickersaftes, so dass eine Anstauung, Ansammlung oder ein Stehenbleiben des Silage-Sickersaftes effektiv verhindert wird und die Korrosionsgefahr für Bodenplatte und Seitenwände darüber so gering wie möglich gehalten werden kann.

Besonders bevorzugt weisen die Durchbrechungen in den Bauelementen eine rechteckige Querschnittsform mit einer Kantenlänge von beispielsweise 5 cm auf 5 cm auf. Durch eine zweckdienliche Abdeckung der Durchbrechungen mit entsprechenden Gittern, Netzen oder flüssigkeitsdurchlässigen Stopfen auf der dem Einlagerungsbereich abgewandten Außenseite der Bauelemente kann einer Besiedlung des Fahrsilos durch Nager vorgebeugt werden. Die über die Breite der Bauelemente quer verlaufenden Durchbrechungen dienen nicht ausschließlich als Ablaufrinnen für die Silagesickersäfte, sondern haben daneben noch eine weitere Funktion als Transport- oder Versetzhilfen für die Bauelemente selbst bzw. als Einschub- oder Verankerungsmöglichkeit für verschiedenste Zusatzelemente, da beispielsweise Schlupfgurte, Kran- oder Gabelstaplergabeln sowie zur Befestigung oder als Ausrichthilfe dienende Einschubelemente in diese Durchbrechungen eingreifen können.

Gemäß einer besonders bevorzugten Ausführungsform der vorliegenden Erfindung sind die erste und zweite seitliche Begrenzungswand im Wesentlichen parallel zueinander sowie parallel zu einer Längsachse des Fahrsilos geführt und bestehen jeweils aus einer Mehrzahl im Verband versetzt zueinander angeordneter Bauelemente. Vorteilhaft sind die Bauelemente in mindestens zwei Reihen aufeinander angeordnet. Zusätzliche Reihen von Bauelementen sind möglich, dienen aber nicht einer gewollt einfachen Bauweise, so dass eine Begrenzungswand aus zwei Reihen von Bauelementen bevorzugt ist. Besonders vorteilhaft weist in dieser Ausführungsform die Bodenplatte ein erstes und ein zweites Gefälle auf, wobei das erste Gefälle ausgehend von einer parallel zur Längsachse verlaufenden, gedachten Linie, insbesondere ausgehend von einer entlang der Längsachse verlaufenden, von den beiden seitlichen Begrenzungswänden im Wesentlichen gleich weit beabstandeten, gedachten Mittellinie in der Bodenplatte in Richtung der ersten seitlichen Begrenzungswand hin verläuft. Das zweite Gefälle verläuft dabei ebenfalls ausgehend von der parallel bzw. entlang der Längsachse des Fahrsilos verlaufenden Linie in Richtung der zweiten seitlichen Begrenzungswand hin. Die Bodenplatte fällt in dieser bevorzugten Ausführungsform mit zwei gegeneinander gerichteten Gefällen in zwei Richtungen, nämlich zur ersten und zur zweiten seitlichen Begrenzungswand hin, ab. Das erste und zweite Gefälle können dabei gleichwertig ausgebildet sein, es kann aber je nach örtlichen Gegebenheiten und Anwendungsbereichen auch eines der Gefälle steiler ausgebildet sein als das andere.

Besondere Vorteile ergeben sich dadurch, dass zusätzlich eine dritte, stirnseitige Begrenzungswand vorgesehen ist, wobei die stirnseitige Begrenzungswand ebenfalls aus einer Mehrzahl im Verband versetzt zueinander angeordneter Bauelemente besteht. Besonders vorteilhaft erstreckt sich die vorzugsweise im Wesentlichen senkrecht zur ersten und zweiten seitlichen Begrenzungswand ausgerichtete stirnseitige Begrenzungswand von der ersten zur zweiten seitlichen Begrenzungswand, so dass der Einlagerungsbereich von drei Seiten her eingegrenzt werden kann.

Bevorzugt weisen die Bauelemente im Wesentlichen eine Länge in einem Bereich von 0,5 m bis 2 m, bevorzugt eine Länge von rund 1 m, eine Breite in einem Bereich von 0,5 m bis 1,5 m, bevorzugt eine Breite von rund 0,7 m und eine Höhe in einem Bereich von 0,2 m bis 1,5 m, bevorzugt in einem Bereich von 0,3 m bis 1 m, besonders bevorzugt in einem Bereich von 0,3 m bis 0,7 m und insbesondere bevorzugt von rund 0,5 m auf. Vorzugsweise weisen die Bauelemente einen im Wesentlichen trapezförmigen Querschnitt auf, wobei die dem Einlagerungsbereich abgewandte äußere Seitenfläche näherungsweise senkrecht zur Unterseite angeordnet ist und die dem Einlagerungsbereich zugewandte innere Seitenfläche vorzugsweise mit der Unterseite einen Winkel von 50° bis 75°, besonders bevorzugt einen Winkel in einem Bereich von 55° bis 67° und insbesondere bevorzugt einen Winkel von rund 57° einschließt. Bei den genannten, im Querschnitt trapezförmigen Bauelementen ist eine untere Breite an der Unterseite der Bauelemente größer als eine obere Breite der Bauelemente an der Oberseite. Zur Herstellung einer seitlichen Begrenzungswand werden daher sinnvollerweise Bauelemente in unterschiedlichen Größenarten zur Verfügung gestellt, wobei beispielsweise die untere Breite der einen Größenart der oberen Breite einer weiteren Größenart entspricht. Durch Aufeinanderstecken dieser zwei Größenarten von Bauelementen kann zum Beispiel eine seitliche Begrenzungswand mit einer stufenlos und glatt verlaufenden, schrägen Innenseite erzeugt werden.

Besondere Vorteile ergeben sich ebenso dadurch, dass neben Bauelementen unterschiedlicher Größenart auch Bauelemente unterschiedlicher Bauart bzw. unterschiedlicher Formenart zum Einsatz kommen. So können zum Beispiel die zur Erstellung der oberen Reihe einer Begrenzungswand verwendeten Bauelemente derart geformt sein, dass sie als Abschlusselemente dienen. Besonders vorteilhaft ist dazu beispielsweise die Oberseite der Bauelemente abgeschrägt ausgebildet und die Bauelemente weisen in ihrem oberen Bereich eine Auskragung auf, so dass auftreffendes Niederschlagswasser problemlos nach außen ablaufen kann.

Jede aus einer Mehrzahl im Verband versetzt zueinander angeordneter Bauelemente gebildete Begrenzungswand weist vorzugsweise eine Höhe in einem Bereich von 0,5 m bis 3 m, bevorzugt eine Höhe in einem Bereich von 0,7 m bis 2,5 m besonders bevorzugt eine Höhe in einem Bereich von 0,7 m bis 2 m, ganz besonders bevorzugt eine Höhe von rund 1,5 m und insbesondere bevorzugt eine Höhe von rund 1 m auf. Die insbesondere bevorzugte Höhe von rund 1 m ist für seitliche Begrenzungswände eines Fahrsilos vollkommen ausreichend, sofern das Siliergut in Form eines trapezartigen Haufens bevorzugt mit einem Böschungswinkel in einem Bereich von 45° bis 60°, besonders bevorzugt mit einem Böschungswinkel von rund 52,5° aufgeschichtet wird. Diese Aufschichtungvariante ist neuerdings durch Verwendung spezieller Fahrzeuge, beispielsweise durch Verwendung von Pistenraupen mit breitem Räumschild, möglich. Die Pistenraupen sind in der Lage, sehr steile Rampen anzufahren, können das Siliergut schichtweise auffüllen und dabei durch die Wirkung ihres vergleichsweise großen Gewichts und der Rüttelwirkung ihrer Ketten zugleich ausreichend verdichten ohne mehrfach über das Siliergut fahren zu müssen. Zusätzliche Verdichtung wird mittels des Anpressdruckes des Räumschildes erreicht.

Bei der beschriebenen Art von Haufensilos muss das Siliergut nicht notwendigerweise und vor allem nicht über die gesamte Höhe des Siliergut- bzw. Silage-Haufens durch die seitlichen Begrenzungswände eines Fahrsilos abgestützt werden. Vielmehr kann das Silagematerial bei einer Höhe der seitlichen Begrenzungswände von 0,5 m bis 3 m bis zu einer Höhe von rund 10 m aufgeschichtet werden.

Zur Ableitung der beim Siliervorgang aus dem Einlagerungsbereich abgeführten Silage-Sickersäfte, weist die Bodenplatte des Fahrsilos bevorzugt außerhalb des Einlagerungsbereiches wenigstens eine Abflussrinne zur Aufnahme der Silage-Sickersäfte auf. Beispielsweise wird die Abflussrinne außerhalb des Einlagerungsbereiches in der Bodenplatte in einer erforderlichen Größe durch Fräsen erzeugt und anschließend bevorzugt mit einem Bitumenanstrich bzw. mit einem streichbaren Flüssigasphalt versiegelt. Die Abflussrinne kann mittels der Fräsarbeiten beim Einfräsen in die Bodenplatte mit einem in Längsrichtung des Fahrsilos verlaufenden Gefälle in einem Bereich von 0,5 % bis 3 %, bevorzugt von rund 1 % versehen werden. Alternativ kann auch der Untergrund bzw. das Baugelände bereits vor Erstellen der Bodenplatte so bearbeitet werden, dass die gesamte Bodenplatte ein in Längsrichtung des Fahrsilos verlaufendes Gefälle in einem Bereich von 0,5 % bis 3 %, bevorzugt von rund 1 % aufweist. Der Silage-Sickersaft kann über die Abflussrinnen beispielsweise in erdverlegte Rohrleitungen eingeleitet werden und einem Lager, vorzugsweise einer Sammelgrube zugeführt werden. Beispielsweise kann der Silage-Sickersaft zur Entsorgung oder zur weiteren Verwendung mit Hilfe einer Pumpe dem Substratlager oder Endlager einer Biogasanlage zugeführt werden. Die Abflussrinnen sind vorzugsweise offen und werden nicht abgedeckt, so dass sie bei Bedarf schnell und einfach gereinigt werden können und zudem kaum zu einer Geruchsbelästigung beitragen.

Da das in einem Fahrsilo eingelagerte Silagematerial für die Vergärung bekanntermaßen näherungsweise luftdicht abgeschlossen sein muss, wird das zu einem Haufen aufgeschichtete Silagematerial mit mehreren Schichtungen von luftundurchlässigen Folien und Schutzplanen komplett abgedeckt. Auf der Abdeckfolie des abgedeckten Silagehaufens auftreffendes Niederschlagswasser läuft ab, sammelt sich ringsum und muss abgeführt werden. Insbesondere unter dem Aspekt des Umwelt- und Gewässerschutzes ergeben sich besondere Vorteile wenn ein separates Abflusssystem zum Abführen von Niederschlagswasser vorgesehen ist, wobei das Niederschlagswasser getrennt von den während des Siliervorganges entstehenden Silage-Sickersäften abgeführt werden kann.

Die äußere Abdeckplane eines Silagehaufens wird beispielsweise wenigstens teilweise über die seitlichen Begrenzungswände geführt und auf den seitlichen Begrenzungswänden durch Auflegen schwerer Elemente, insbesondere Sandsäcke beschwert und festgehalten. In vorgegebenen Abständen kann die Abdeckungsplane mit in Querrichtung zum Fahrsilo verlaufenden Spanngurten zusätzlich befestigt werden, wobei entsprechende Haken für einen Eingriff der Spanngurte als Verankerungen in die Bauelemente der seitlichen Begrenzungswände eingebracht werden können. In bevorzugten Ausführungsformen kann zusätzlich eine Haltevorrichtung für die zur Befestigung der Abdeckplane vorgesehenen Spanngurte vorhanden sein, wobei die Haltevorrichtung für Spanngurte zumindest aus einem Befestigungsstück und einem gelenkig mit dem Befestigungsstück verbundenen Fußstück gebildet ist. Mittels eines am Fußstück vorgesehenen Eingriffsabschnittes kann das Fußstück der Haltevorrichtung in Durchbrechungen von Bauelementen eingreifen und so gehaltert bzw. standsicher aufgestellt werden. Das Befestigungsstück ist im Wesentlichen U-förmig ausgebildet, wobei ein erster Schenkelabschnitt für die gelenkige Verbindung mit dem Fußstück und ein zweiter Schenkelabschnitt für die Fixierung des Spanngurtes zur Verfügung steht.

Die oben beschriebene Führung der Abdeckplane über die seitliche Begrenzungswand bietet vor allem in Kombination mit vorzugsweise vorgesehenen, separaten Entwässerungsrinnen den besonderen Vorteil, dass ein Abflusssystem für Niederschlagswasser und die Abflussrinnen für Silage-Sickersaft voneinander getrennt sind, so dass verhindert werden kann, dass sich das Niederschlagswasser mit dem Silage-Sickersaft vermischt. Stattdessen kann das Niederschlagswasser durch die Entwässerungsrinnen aufgefangen und der normalen Entwässerung über das Kanalsystem zugeleitet werden. Durch das Vorhandensein eines separaten Abflusssystems für Niederschlagswasser wird besonders vorteilhaft die Menge des gemäß Umwelt- und Düngemittelverordnung zu entsorgenden Silage-Sickersaftes nicht unnötig erhöht.

Bevorzugt weisen die Bauelemente, die den oberen Abschluss einer Begrenzungswand bilden, eine Ausnehmung an ihrer Oberseite auf, die die Sandsäcke oder andere Vorrichtungen zum Befestigen der Abdeckplane aufnehmen kann. Diese Ausnehmung ist bevorzugt so gestaltet, dass die Oberseite des Abschlusselements nicht planar ausgebildet ist, sondern sich zwischen den äußeren Seiten der Bauelemente in Richtung Bodenplatte eine Aussparung befindet.

Gemäß einer besonders bevorzugten Ausführungsform der vorliegenden Erfindung ist zum Abführen von Niederschlagswasser eine mehrteilige Entwässerungsrinne, beispielsweise nach Art einer Dachrinne aus verzinktem Stahlblech, vorgesehen, wobei die mehrteilige Entwässerungsrinne über Befestigungselemente an der dem Einlagerungsbereich abgewandten Außenseite einer seitlichen Begrenzungswand befestigbar ist. Jedes der Befestigungselemente zur Befestigung der Entwässerungsrinnen ist zum Beispiel mehrteilig ausgebildet, und weist einen Rinnenhaken und ein damit vorzugsweise mittels Verschraubung verbundenes Einschubelement auf. Die Einschubelemente sind quer zur seitlichen Begrenzungswand verlaufend angeordnet und sind derart ausgebildet, dass sie in die an der Unterseite der Bauelemente vorhandenen Durchbrechungen eingeschoben werden können. Bevorzugt bestehen die Einschubelemente aus einem Stahlrohr mit rechteckigem Querschnitt. Vorteilhaft ist eine höhenverstellbare Befestigung der Rinnenhaken an den in den Durchbrechungen aufgenommenen Einschubelementen möglich, so dass durch geeignete Einstellung der höhenverstellbaren Verschraubung in Längsrichtung des Fahrsilos ein Gefälle entlang der Entwässerungsrinne erreicht werden kann. Die Entwässerungsrinne selbst ist in den Rinnenhaken aufgenommen und kann sicherheitshalber durch geeignete Befestigungs- oder Fixiermittel fixiert werden. Bevorzugt ist in den Ausführungsformen, in denen die beschriebene mehrteilige Entwässerungsrinne zum separaten Abführen von Niederschlagswasser vorgesehen ist, die obere Reihe der seitlichen Begrenzungswand durch Bauelemente gebildet, welche jeweils eine Auskragung aufweisen. Durch geeignete Ausgestaltung und Anordnung der Bauelemente sowie der Entwässerungsrinne kann auf diese Weise das vom Silagehaufen herabfließende Niederschlagswasser direkt in die Entwässerungsrinne eingeleitet werden.

Sind in den oberen Bauelementen auf der Unterseite Durchbrechungen zur Aufnahme der Einschubelemente vorhanden, weisen die darunter liegenden Bauelemente bevorzugt entlang ihrer Längsachse auf der Oberseite Rinnen auf, die dazu geeignet sind, das aus dem Silagebereich austretende Sickerwasser in Längsrichtung innerhalb der Begrenzungswand in die Fugen zwischen benachbarten Bauelementen abzuleiten. Dies schützt die Elemente der Entwässerungsrinne vor einem möglichen Kontakt mit den korrosiven Sickersäften. Insbesondere bevorzugt ist die obere Reihe einer Begrenzungswand durch Bauelemente mit einer Auskragung gebildet, so dass das vom Silagehaufen herabfließende Niederschlagswasser über die Sandsäcke hinweg direkt in die Entwässerungsrinnen geleitet wird und nicht an der Außenseite der Bauelemente nach unten fließt. Die Auskragungen im oberen Bereich der Bauelemente ragen auf der Außenseite der Begrenzungswand über die Grundfläche des entsprechenden Bauelementes hinaus.

Gemäß einer alternativen bevorzugten Ausführungsform der vorliegenden Erfindung sind die aus einer Mehrzahl im Verband versetzter Bauelemente gebildeten Begrenzungswände derart zum Abführen von Niederschlagswasser ausgebildet und eingerichtet, dass eine die seitlichen Begrenzungswände nach oben hin abschließende, obere Reihe von Bauelementen aus mehreren, aneinander anschließenden, profilierten Abschlusselementen besteht und dadurch eine Entwässerungsrinne ausbildet. Die profilierten Abschlusselemente weisen dabei an ihrer Oberseite eine sich längs ersteckende nutförmige Ausnehmung mit einem näherungsweise U- oder V-förmigen Querschnitt auf. Diese nutförmige Ausnehmung, die als Entwässerungsrinne dient, ist im Vergleich zu der oben beschriebenen Ausnehmung, die zur Aufnahme von Sandsäcken dient, deutlich tiefer ausgebildet und erstreckt sich auch nur über einen Teil der Breite des Bauelements. Um eine effektive Abführung des Niederschlagswassers zu gewährleisten, sollten die Entwässerungsrinnen ein Gefälle aufweisen, wobei zum Beispiel der Untergrund bzw. das Baugelände bereits vor Erstellen der Bodenplatte derart gestaltet werden kann, dass die gesamte Bodenplatte und damit auch die auf der Bodenplatte aufsitzenden seitlichen Begrenzungswände ein in Längsrichtung des Fahrsilos verlaufendes Gefälle in einem Bereich von 0,5 % bis 3 %, bevorzugt von rund 1 % aufweisen.

### Kurze Beschreibung der Zeichnungen

Die Erfindung soll nachfolgend anhand von Ausführungsbeispielen im Zusammenhang mit den Zeichnungen näher erläutert werden. Es zeigen
- Fig. 1: beispielhaft einen Abschnitt einer Ausführungsform eines erfindungsgemäßen Fahrsilos in perspektivischer Ansicht,
- Fig. 2: beispielhaft eine perspektivische Ansicht eines Bauelementes zur Bildung einer seitlichen Begrenzungswand,
- Fig. 3a: einen Querschnitt durch das Bauelement der Figur 2,
- Fig. 3b: einen Querschnitt durch eine Ausführungsform eines Abschlusselementes zur Ausbildung einer eine seitliche Begrenzungswand nach oben hin abschließenden Reihe mit Entwässerungsrinne,
- Fig. 4a: einen Querschnitt durch eine Ausführungsform eines Bauelementes zur Ausbildung einer unteren Reihe,
- Fig. 4b: eine perspektivische Ansicht einer Ausführungsform eines Bauelementes zur Ausbildung einer unteren Reihe,
- Fig. 5a: einen Querschnitt durch eine Ausführungsform eines Bauelementes zur Ausbildung einer oberen Reihe,
- Fig. 5b: eine perspektivische Ansicht einer Ausführungsform eines Bauelementes zur Ausbildung einer oberen Reihe,
- Fig. 6: eine perspektivische Ansicht einer Ausführungsform einer seitlichen Begrenzungswand,
- Fig. 7: eine Haltevorrichtung für einen Spanngurt,
- Fig. 8: ausschnittsweise eine Schnittdarstellung eines mit Siliergut befüllten Fahrsilos im Bereich einer seitlichen Begrenzungswand und
- Fig. 9: einen Querschnitt durch eine Siloanlage mit zwei nebeneinander angeordneten Fahrsilos.

### Wege zur Ausführung der Erfindung

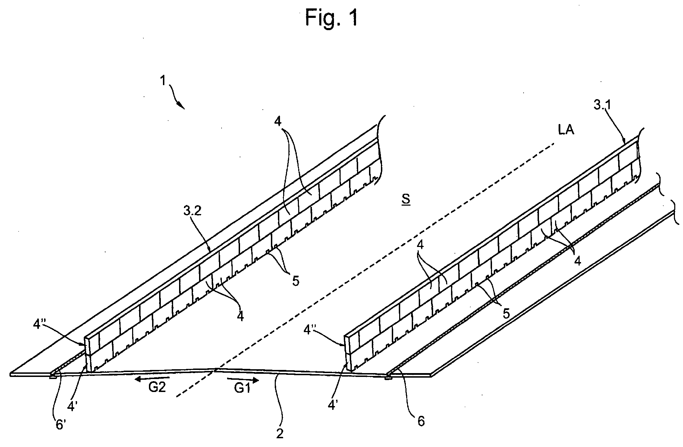

In der Figur 1 ist ein Abschnitt eines Ausführungsbeispiels eines Fahrsilos 1 in perspektivischer Ansicht schematisch dargestellt. Das Fahrsilo 1 weist eine Bodenplatte 2 und eine erste und eine zweite, jeweils auf der Bodenplatte 2 aufgesetzte seitliche Begrenzungswand 3.1, 3.2 auf, wobei die seitlichen Begrenzungswände 3.1, 3.2 im Wesentlichen parallel zueinander und parallel zu einer Längsachse LA des Fahrsilos 1 geführt sind und einen Einlagerungsbereich S für Siliergut begrenzen.

Jede der beiden seitlichen Begrenzungswände 3.1, 3.2 besteht aus einer Mehrzahl im Verband versetzt zueinander angeordneter Bauelemente 4 und ist aus zwei übereinander angeordneten Reihen von Bauelementen 4 gebildet, nämlich aus einer zu der Bodenplatte 2 benachbart angeordneten, direkt mit der Bodenplatte 2 in Kontakt stehenden unteren Reihe 4' und einer über der unteren Reihe 4' angeordneten und mit der unteren Reihe 4' in Kontakt stehenden oberen Reihe 4" von Bauelementen 4. Die zwischen den neben- und übereinander angeordneten Bauelementen 4 bestehenden Zwischenräume bzw. Fugen oder Spalten sind nicht mit einem Bindemittel oder Fugenabdichtmittel ausgefüllt und bleiben als unverfugte, unabgedichtete Zwischenräume bestehen, so dass die im Einlagerungsbereich S gebildeten Silage-Sickersäfte durch diese Zwischenräume hindurch austreten können.

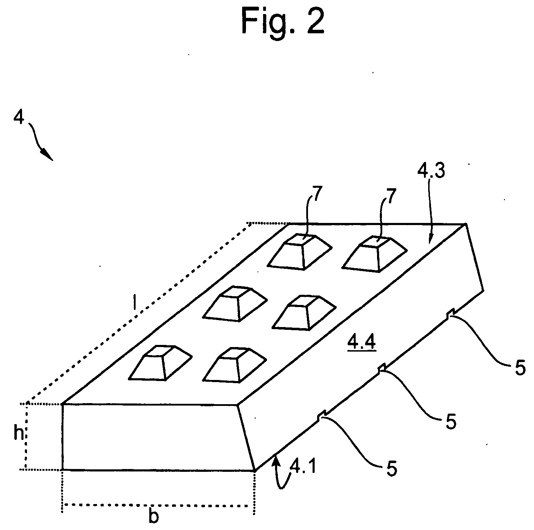

Die zur Bildung der unteren Reihe 4' verwendeten Bauelemente 4 weisen erfindungsgemäß zusätzlich auf ihrer der Bodenplatte 2 zugewandten Unterseite 4.1 (in der Figur 1 nicht gekennzeichnet, siehe Figur 2) eine Anzahl Durchbrechungen 5 für einen verbesserten Abfluss der im Einlagerungsbereich S gebildeten Silage-Sickersäfte auf. Die Durchbrechungen 5 erstrecken sich dabei von einer dem Einlagerungsbereich S zugewandten Innenseite der Begrenzungswände 3.1, 3.2 bis zu einer dem Einlagerungsbereich S abgewandten Außenseite der Begrenzungswände 3.1, 3.2 und stellen somit eine die Begrenzungswände 3.1, 3.2 querende Verbindung zwischen dem Einlagerungsbereich S und dem das Fahrsilo 1 umgebenden Außenraum dar.

Die Bauelemente 4 bestehen an ihrer Oberfläche aus einem korrosionsbeständigen Material und sind im dargestellten Ausführungsbeispiel in Form von Betongusssteinen ausgebildet, welche an ihrer Oberfläche eine säurefeste Beschichtung aus Epoxidharz aufweisen.

Bei der Bodenplatte 2 des in der Figur 1 dargestellten Fahrsilos 1 handelt es sich um eine zweischichtig aufgebaute, aus einer Tragschicht und einer Deckschicht bestehende Asphaltfläche. Die Bodenplatte 2 erstreckt sich über den Einlagerungsbereich S des Fahrsilos 1 hinaus, wobei die Bodenplatte 2 zwei außerhalb des Einlagerungsbereiches S angeordnete Abflussrinnen 6, 6' für die aus dem Einlagerungsbereich S abgeführten Silage-Sickersäfte aufweist. Eine Abflussrinne 6 ist dabei auf der dem Einlagerungsbereich S abgewandten Außenseite der ersten seitlichen Begrenzungswand 3.1 und eine Abflussrinne 6' auf der dem Einlagerungsbereich S abgewandten Außenseite der zweiten seitlichen Begrenzungswand 3.2 angeordnet. Innerhalb des Einlagerungsbereiches S ist die Bodenplatte 2 fugenlos, mit einer glatten, unterbrechungsfreien Oberfläche ausgebildet.

Im dargestellten Ausführungsbeispiel weist die Bodenplatte 2 ein erstes Gefälle G1 und ein zweites Gefälle G2 auf, welche in der Figur 1 durch die Pfeile in abfallender Richtung angedeutet sind. Das erste und zweite Gefälle G1, G2 verlaufen jeweils ausgehend von einem höheren Niveaupunkt aus zu einem tieferen Niveaupunkt, wobei eine entlang der Längsachse LA des Fahrsilos 1 verlaufende gedachte Mittellinie zwischen den beiden seitlichen Begrenzungswänden 3.1, 3.2 im Einlagerungsbereich S den höheren Niveaupunkt für beide Gefälle G1, G2 darstellt. Anders ausgedrückt teilt die entlang der Längsachse LA des Fahrsilos 1 gedachte Mittellinie die Bodenplatte 2 in zwei, in entgegengesetzte Richtungen abfallende Flächenabschnitte.

Das erste Gefälle G1 von rund 2% erstreckt sich ausgehend von dieser entlang der Längsachse LA verlaufenden Mittellinie in Richtung der ersten seitlichen Begrenzungswand 3.1, welche den tieferen Niveaupunkt des ersten Gefälles G1 darstellt. Das Gefälle G1 wird über die Begrenzungswand 3.1 hinaus bis hin zu der Abflussrinne 6 fortgeführt. Analog dazu erstreckt sich das zweite Gefälle G2 von ebenfalls rund 2% ausgehend von der entlang der Längsachse LA verlaufenden Mittellinie in Richtung der zweiten seitlichen Begrenzungswand 3.2, welche wiederum den tieferen Niveaupunkt des zweiten Gefälles G2 darstellt. Das Gefälle G2 wird über die Begrenzungswand 3.2 hinaus bis hin zu der Abflussrinne 6' fortgeführt. Der Silage-Sickersaft kann daher vorteilhaft in zwei Richtungen ablaufen, in den Abflussrinnen 6, 6' gesammelt werden und von dort aus beispielsweise in ein unterirdisches Rohrleitungssystem eingeleitet und einer Sammelgrube zugeführt werden.

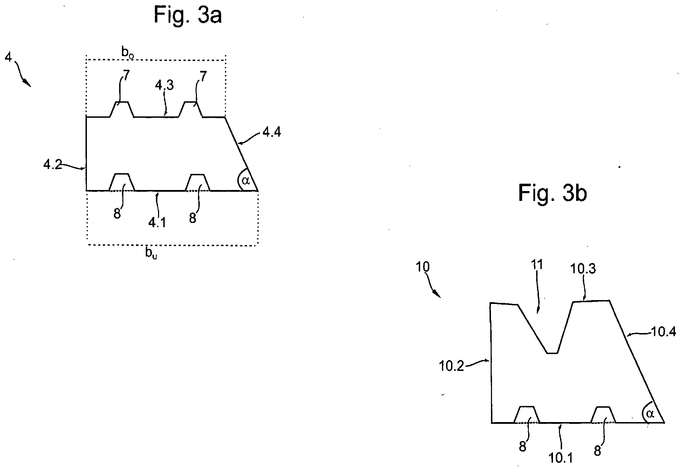

Die Figur 2 zeigt schematisch dargestellt eine Ausführungsform eines Bauelementes 4 in perspektivischer Ansicht. Das Bauelement 4 weist eine Länge l von 1 m, eine Breite b von 0,7 m und eine Höhe h von 0,3 m auf. Das Bauelement 4 weist an einer im Gebrauchszustand der Bodenplatte 2 des Fahrsilos 1 (siehe beispielsweise Figur 1) abgewandten Oberseite 4.3 mehrere noppenartige Ausbuchtungen 7 und an einer der Oberseite 4.3 gegenüber liegenden Unterseite 4.1 mehrere Ausnehmungen 8 (in der Figur 2 nicht dargestellt, siehe Figur 3a) auf, wobei die noppenartigen Ausbuchtungen 7 eines Bauelementes 4 für den Eingriff in die Ausnehmungen 8 weiterer Bauelemente vorgesehen sind. Die Ausnehmungen 8 auf der Unterseite 4.1 sind für Bauelemente 4, die die untere Reihe der Bauelemente bilden und direkt auf der Bodenplatte 2 aufliegen nicht obligatorisch, sondern können entfallen. Mehrere im Verband versetzt zueinander angeordneter Bauelemente 4 können so in einfacher Weise versetzt aufeinander gesteckt werden, wodurch eine mauerartig aufgebaute, in sich stabile und standfeste Wand entsteht. Die beschriebenen Bauelemente 4 sowie das versetzte Aufeinanderstecken der Bauelemente 4 können mit den bekannten Kinderbausteinen und dem Zusammenstecken dieser Kinderbausteine verglichen werden. Sind nun eine Mehrzahl von Bauelementen 4 im Verband versetzt, so stehen beispielsweise die noppenartigen Ausbuchtungen 7 eines Bauelementes 4 in Eingriff mit Ausnehmungen 8 von zwei oberhalb angeordneten Bauelementen 4. Anzahl, Anordnung und geometrische Ausbildung der noppenartigen Ausbuchtungen 7 und der Ausnehmungen 8 sind aufeinander abgestimmt und für einen formschlüssigen Eingriff ausgebildet.

Das in der Figur 2 beispielhaft dargestellte Bauelement 4 weist an der Unterseite 4.1 mehrere Durchbrechungen 5 auf und findet beispielsweise zur Bildung der zu der Bodenplatte 2 des Fahrsilos 1 benachbart angeordneten unteren Reihe 4' einer seitlichen Begrenzungswand 3.1, 3.2 (in der Figur 1 dargestellt) Verwendung. Die im Querschnitt rund 5 cm auf 5 cm messenden Durchbrechungen 5 dienen dem erleichterten Abfluss der im Einlagerungsbereich S des Fahrsilos 1 gebildeten Silage-Sickersäfte. Vorteilhaft erleichtern die Durchbrechungen 5 auch den Transport bzw. das Versetzen der Bauelemente 4, da sie beispielsweise einen Eingriff von Krangabeln, Gabelstaplergabeln oder Schlupfgurten erlauben.

Figur 3a zeigt schematisch dargestellt einen Querschnitt durch das Bauelement 4 der Figur 2. Das Bauelement 4 mit den an der Oberseite 4.3 ausgebildeten noppenartigen Ausbuchtungen 7 und den an der Unterseite 4.1 ausgebildeten Ausnehmungen 8 weist einen im Wesentlichen trapezförmigen Querschnitt auf, wobei die sich gegenüberliegenden und im Wesentlichen parallel zueinander ausgerichteten Ober- 4.3 und Unterseiten 4.1 senkrecht zu einer im Gebrauchszustand des Bauelementes 4 dem Einlagerungsbereich S des Fahrsilos 1 abgewandten äußeren Seitenfläche 4.2 verlaufen. Eine der äußeren Seitenfläche 4.2 gegenüberliegende innere Seitenfläche 4.4 schließt im dargestellten Beispiel mit der Unterseite 4.1 einen Winkel α von rund 67° ein. Durch den im Wesentlichen trapezförmigen Querschnitt des in Figur 3a dargestellten Bauelementes 4, ergibt sich für das Bauelement 4 eine im Vergleich zu einer unteren Breite b_{U} verringerte obere Breite b_{O}.

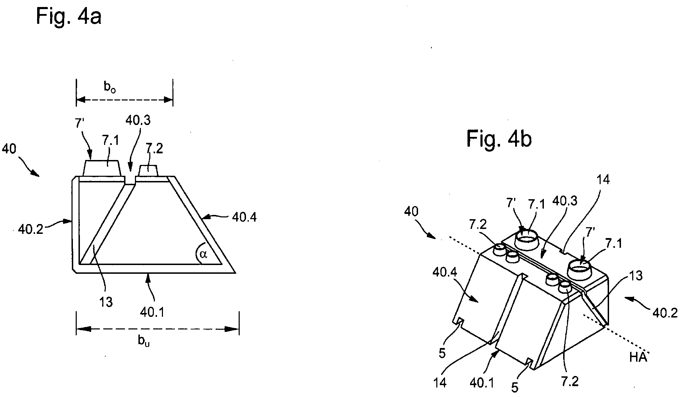

Figur 3b zeigt schematisch dargestellt einen Querschnitt durch ein profiliertes Abschlusselement 10. Das profilierte Abschlusselement 10 weist einen im Wesentlichen trapezförmigen Querschnitt mit einer Unterseite 10.1 und einer der Unterseite 10.1 gegenüberliegenden Oberseite 10.3 auf. Die Unterseite 10.1 des profilierten Abschlusselementes 10 verläuft näherungsweise senkrecht zu einer im Gebrauchszustand des Bauelementes 4 dem Einlagerungsbereich S des Fahrsilos 1 abgewandten äußeren Seitenfläche 10.2. Eine der äußeren Seitenfläche 10.2 gegenüberliegende innere Seitenfläche 10.4 schließt im dargestellten Beispiel mit der Unterseite 10.1 einen Winkel α von rund 67° ein. Die Oberseite 10.3 weist auf der der inneren Seitenfläche 10.4 angrenzenden Seite bevorzugt ein etwas höheres Niveau auf als an der der äußeren Seitenfläche 10.2 angrenzenden Seite. Dies bewirkt, dass in dem Fall, dass die Entwässerungsrinne das auftretende Niederschlagswasser nicht vollständig abführen kann, dieses nicht in den Silobereich eintritt, sondern bevorzugt nach außen abgeführt wird. Das beispielhaft dargestellte Abschlusselement 10 findet beispielsweise Verwendung zur Bildung der oberen Reihe 4" einer seitlichen Begrenzungswand 3.1, 3.2 (in der Figur 4 dargestellt) und schließt eine seitliche Begrenzungswand 3.1, 3.2 nach oben hin ab.

Die profilierten Abschlusselemente 10 weisen an ihrer Unterseite 10.1 mehrere Ausnehmungen 8 zur Aufnahme noppenartiger Ausbuchtungen 7 von unterhalb angeordneten Bauelementen 4 auf.

An der Oberseite 10.3 des profilierten Abschlusselementes 10 ist eine in Längsrichtung des Abschlusselementes 10 verlaufende, längliche, nutförmige Ausnehmung 11 vorgesehen, wobei die Ausnehmung 11 durchlaufend ausgebildet ist und sich über die gesamte Länge des Abschlusselementes 10 erstreckt. Mehrere längs aneinander gereihte profilierte Abschlusselemente 10, wie sie zum Beispiel als obere Reihe 4" einer seitlichen Begrenzungswand 3.1, 3.2 (siehe Figur 4) angeordnet sind, bilden dadurch eine Rinne 9 aus, die dem Abführen von Niederschlagswasser dient.

Die Figuren 4a und 4b zeigen in einer Schnittdarstellung bzw. perspektivisch dargestellt eine bevorzugte Ausführungsform eines zur Bildung der unteren Reihe 4' (siehe Figur 1) verwendeten Bauelementes 40, welches in Form eines befüllbaren Kunststoffhohlkörpers ausgebildet und aus einem Polyethylen hoher Dichte (High-density Polyethylen; HD-PE) mit einer Wandstärke von rund 2 bis 6 mm hergestellt ist. Das Bauelement 40 weist einen im Wesentlichen trapezförmigen Querschnitt auf, wobei die sich gegenüberliegenden und im Wesentlichen parallel zueinander ausgerichteten Ober- 40.3 und Unterseiten 40.1 senkrecht zu einer im Gebrauchszustand des Bauelementes 40 dem Einlagerungsbereich S des Fahrsilos 1 abgewandten äußeren Seitenfläche 40.2 verlaufen. Eine der äußeren Seitenfläche 40.2 gegenüberliegende innere Seitenfläche 40.4 schließt im dargestellten Beispiel mit der Unterseite 40.1 einen Winkel α von rund 57° ein.

Das als Kunststoffhohlkörper ausgebildete Bauelement 40 des in den Figuren 4a und 4b dargestellten Beispiels kann auf einer Baustelle vor Ort mit Ortbeton befüllt werden, wobei zum Befüllen der Kunststoffhohlkörper ein Beton mit einer dafür besonders gut geeigneten Zusammensetzung und Konsistenz verwendet wird. Beispielsweise eignet sich ein gerade noch fließfähiger Beton der laut DIN 1045-2 mit seinem Konsistenzbereich "sehr weich" in Ausbreitmaßklasse F4 eingestuft ist. Zum Zweck der Befüllung sind die für den Eingriff in Ausnehmungen in der Unterseite eines weiteren Bauelementes vorgesehenen noppenartigen Ausbuchtungen an der Oberseite 40.3 des Bauelementes 40 in Form von Einfüllöffnungen 7.1 und Entlüftungs- und Kontrollöffnungen 7.2 ausgebildet. Eine im Wesentlichen parallel zur Oberseite 40.3 des Bauelementes 40 verlaufende Deckfläche 7' der noppenartigen Ausbuchtungen ist in diesem Fall durchbrochen ausgebildet und stellt eine Öffnung zur Verfügung, wobei sich die Durchbrechung oder Öffnung im vorliegenden Beispiel vollflächig über die gesamte Deckfläche 7' der Ausbuchtung erstreckt, so dass jede Ausbuchtung lediglich als angeformter Rand oder Stutzen ausgebildet ist. Im vorliegenden Beispiel sind an dem Bauelement 40 zwei Einfüllöffnungen 7.1 und vier Entlüftungs- und Kontrollöffnungen 7.2 vorgesehen, wobei sowohl die Einfüll- als auch die Entlüftungs- und Kontrollöffnungen 7.1, 7.2 näherungsweise kegelstumpfförmig ausgebildet sind, die Einfüllöffnungen 7.1 jedoch einen relativ zu den Entlüftungs- und Kontrollöffnungen 7.2 größeren Durchmesser aufweisen.

Das im Beispiel dargestellte Bauelement 40 verfügt über rinnen- oder nutenartige Vertiefungen 13, 14, welche einerseits der Versteifung dienen und damit die Stabilität des Bauelements 40 verbessern und andererseits zugleich eine Entwässerungs- oder Ablauffunktion übernehmen. Die an der Oberseite 40.3 des Bauelementes 40 näherungsweise in Richtung einer Hauptachse HA des Bauelementes 40 verlaufende rinnen- oder nutenartige Vertiefung 13 quert an den Stirnseiten des Bauelementes 40 schräg nach unten in Richtung der Unterseite 40.1. Die an den sich gegenüberliegenden äußeren und inneren Seitenflächen 40.2, 40.4 angeordneten Vertiefungen 14 erstrecken sich jeweils von der Oberseite 40.3 zur Unterseite 40.1 des Bauelementes 40.

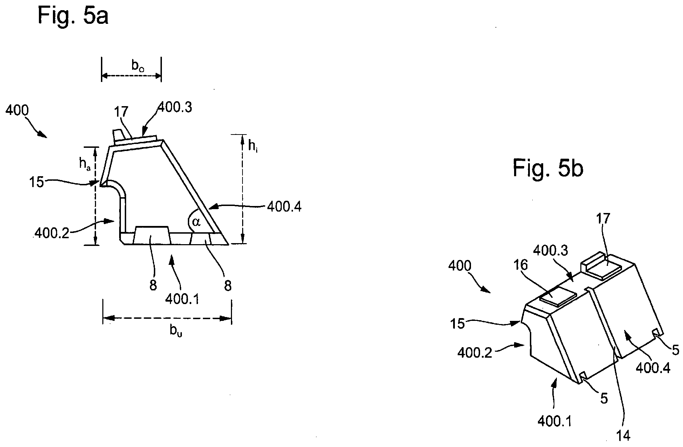

Figuren 5a und 5b zeigen in einer Schnittdarstellung bzw. perspektivisch dargestellt eine bevorzugte Ausführungsform eines zur Bildung der oberen Reihe 4" (siehe Figur 1) verwendeten Bauelementes 400, welches ebenfalls in Form eines befüllbaren Kunststoffhohlkörpers ausgebildet und aus einem Polyethylen hoher Dichte (High-density Polyethylen; HD-PE) mit einer Wandstärke von rund 2 bis 6 mm hergestellt ist. Das Bauelement 400 weist einen im Wesentlichen trapezförmigen Querschnitt auf, wobei sich jeweils die Ober- 400.3 und Unterseite 400.1 bzw. die innere und äußere Seitenfläche 400.4, 400.2 gegenüberliegen. Im dargestellten Beispiel schließt die dem Einlagerungsbereich S des Fahrsilos 1 zugewandte innere Seitenfläche 400.4 mit der Unterseite 400.1 einen Winkel α von rund 57° ein, so dass eine obere Breite bₒ des Bauelementes 400 geringer ist als eine untere Breite bᵤ. Die Oberseite 400.3 des Bauelementes 400 fällt von der inneren Seitenfläche 400.4 zur äußeren Seitenfläche 400.2 hin ab, wodurch das Bauelement 400 eine innere Höhe hᵢ und eine im Vergleich dazu geringere äußere Höhe hₐ aufweist.

Zur Befüllung des als Kunststoffhohlkörper ausgebildeten Bauelementes 400 mit Ortbeton sind an der Oberseite 400.3 des Bauelementes 400 zwei im Wesentlichen rechteckförmige Öffnungen 16 vorgesehen, über die das Ausgießen der Bauelemente mit Beton erfolgt. Zum Verschließen oder Abdichten der Öffnungen 16 sind diese mit einem ebenfalls aus einem Polyethylen hoher Dichte (HD-PE) hergestellten abschließenden Deckel 17 ausgestattet.

Das im Beispiel dargestellte Bauelement 400 verfügt über eine rinnen- oder nutenartige Vertiefung 14, welche sich von der Oberseite 400.3 zur Unterseite 400.1 des Bauelementes 400 erstreckt. Die rinnen- oder nutenartige Vertiefung 14 dient wiederum sowohl der Versteifung als auch der besseren Entwässerung. Auf der Unterseite 400.1 des Bauelementes sind Ausnehmungen 8 ausgebildet, welche für den Eingriff noppenartiger Ausbuchtungen eines unterhalb angeordneten Bauelementes 40 (siehe Figur 4a und 4b) vorgesehen sind. Die Ausnehmungen 8 stehen dabei für den Eingriff der Einfüllöffnungen 7.1 und der Entlüftungs- und Kontrollöffnungen 7.2 eines in Figur 4a und 4b dargestellten Bauelementes 40 zur Verfügung. Zum Zwecke eines möglichen Toleranzausgleiches und um Spannungen zu vermeiden, sind die Ausnehmungen 8 in Form von Langlöchern ausgebildet.

In seinem oberen Bereich weist das Bauelement 400 auf der dem Einlagerungsbereich S abgewandten äußeren Seitenfläche 400.2 eine Auskragung 15 auf, mittels derer ein auf der abfallenden Oberseite 400.3 des Bauelementes in Richtung nach außen ablaufendes Niederschlagswasser in eine dafür vorgesehene Entwässerungsrinne einlaufen kann.

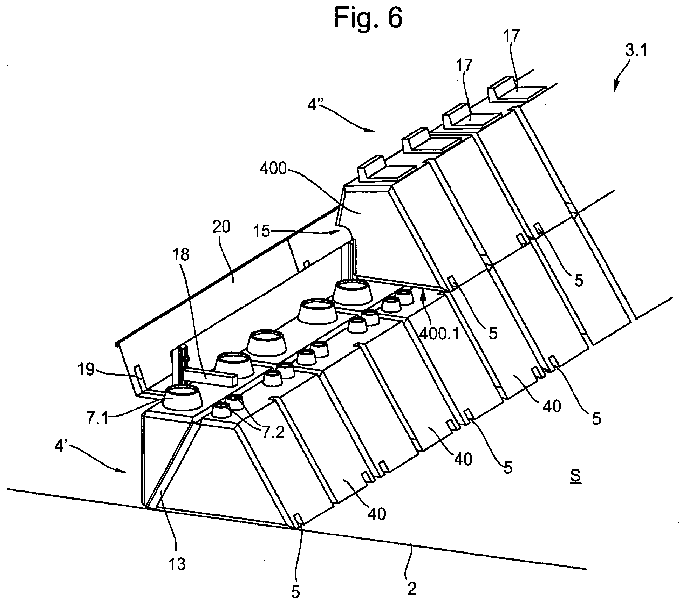

Figur 6 zeigt schematisch dargestellt eine perspektivische Ansicht einer seitlichen Begrenzungswand 3.1 bestehend aus einer unteren und einer oberen Reihe 4', 4" von Bauelementen 40, 400, welche versetzt zueinander im Verband angeordnet sind. In der dargestellten bevorzugten Ausführungsform ist zum Abführen von Niederschlagswasser eine mehrteilige Entwässerungsrinne 20 aus verzinktem Stahlblech vorgesehen, wobei die Entwässerungsrinne 20 über mehrteilig ausgebildete Befestigungselemente an der dem Einlagerungsbereich S abgewandten Außenseite der seitlichen Begrenzungswand 3.1 befestigbar ist. Jedes der mehrteilig ausgebildeten Befestigungselemente weist zumindest einen Rinnenhaken 19 und ein damit verbundenes Einschubelement 18 auf, wobei die Rinnenhaken 19 im Wesentlichen U-förmig und die Einschubelemente 18 im Wesentlichen schienen- oder stabförmig ausgebildet sind. Vorliegend bestehen die Einschubelemente 18 aus einem Stahlrohr mit rechteckigem Querschnitt und sind derart ausgebildet, dass sie in die an der Unterseite 400.1 der Bauelemente 400 vorhandenen Durchbrechungen 5 eingeschoben werden können. Die Rinnenhaken 19 sind an den quer zur seitlichen Begrenzungswand 3.1 verlaufenden, in den Durchbrechungen 5 aufgenommenen Einschubelementen 18 höhenverstellbar angeschraubt und sind dadurch an der seitlichen Begrenzungswand 3.1 gehaltert. Durch eine geeignete Einstellung der höhenverstellbaren Verschraubung kann ein Gefälle entlang der Entwässerungsrinne 20 in Längsrichtung des Fahrsilos erreicht werden. Jedes einzelne Teilstück der mehrteilig ausgebildeten Entwässerungsrinne 20 ist bevorzugt länger als ein Bauelement, so dass nicht an jedem Bauelement ein Befestigungselement angebracht werden muss. Die Entwässerungsrinne 20 kann über ihre gesamte Länge an mehreren Stellen Abflüsse oder Rohranschlüsse aufweisen (nicht dargestellt), über die das Niederschlagswasser in ein beispielsweise unterirdisch verlaufendes Abfluss- bzw. Kanalsystemsystem für Niederschlagswasser eingeleitet wird.

Die Entwässerungsrinne 20 selbst ist in den Rinnenhaken 19 aufgenommen und kann sicherheitshalber durch geeignete Befestigungs- oder Fixiermittel fixiert werden. Die Ausgestaltung und Abmessungen der Entwässerungsrinne 20 sowie die Anordnung an der Außenseite der seitlichen Begrenzungswand 3.1 ist darauf abgestimmt, dass die Auskragungen 15 der Bauelemente 400 der oberen Reihe 4" in den Luftraum oberhalb der Entwässerungsrinne 20 hineinragen, so dass das vom Silagehaufen herabfließende Niederschlagswasser direkt in die Entwässerungsrinne 20 eingeleitet wird.

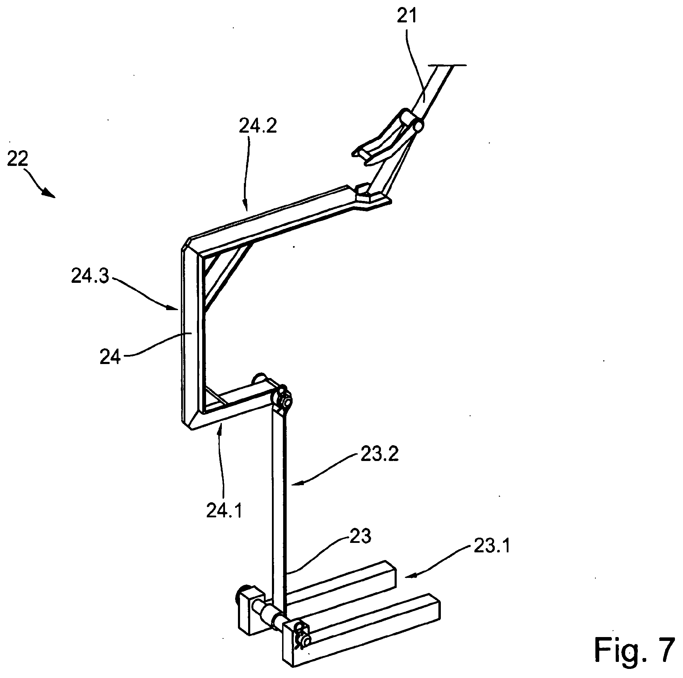

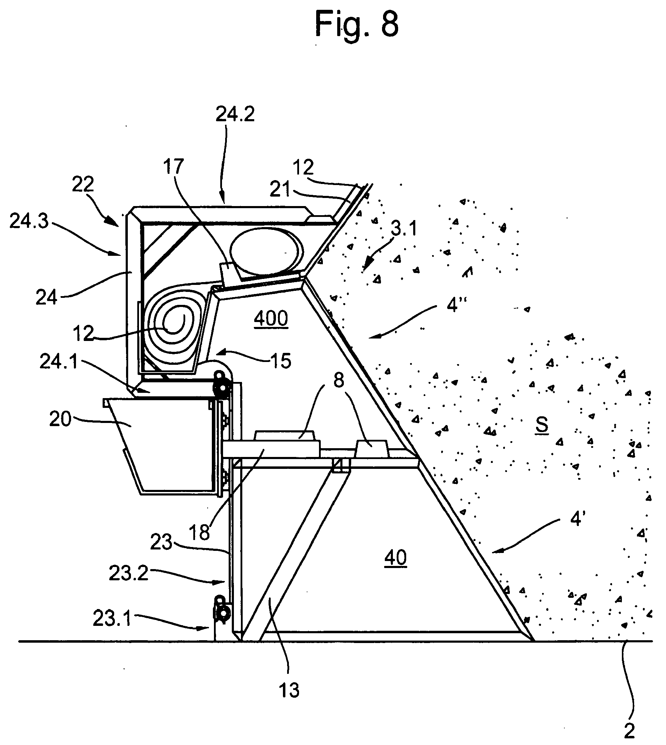

Figur 7 zeigt schematisch dargestellt in perspektivischer Ansicht eine Haltevorrichtung 22 für einen Spanngurt 21 zur Befestigung der Abdeckplane 12 (siehe Figur 8). Die Haltevorrichtung 22 ist mehrteilig ausgebildet und weist zumindest ein Fußstück 23 und wenigstens ein mit dem Fußstück 23 gelenkig verbundenes Befestigungsstück 24 auf. Das Fußstück 23 verfügt über einen Eingriffsabschnitt 23.1 und einen Distanzabschnitt 23.2, wobei im vorliegenden Beispiel der Eingriffs- und der Distanzabschnitt 23.1, 23.2 separat voneinander ausgebildet und gelenkig miteinander verbunden sind. Der Eingriffsabschnitt 23.1 ist für einen Eingriff in Durchbrechungen 5 (in Figur 7 nicht dargestellt) von Bauelementen 4 einer unteren Reihe 4' einer Begrenzungswand 3.1 (ebenso in Figur 7 nicht dargestellt) ausgerichtet. Durch den Eingriff des Eingriffsabschnittes 23.1 in die Durchbrechungen wird die Haltevorrichtung gehaltert bzw. standsicher aufgestellt.

Im dargestellten Beispiel kann der Eingriffsabschnitt 23.1 an der gelenkigen Verbindung in einfacher Weise vom Ende des Distanzabschnittes 23.2 des Fußstücks 23 getrennt und gegebenenfalls zeitweise einer weiteren Verwendung als Ausrichthilfe zugeführt werden. In einer Ausführungsform, bei der die vorgefertigten Bauelemente 40 erst vor Ort mit Beton ausgegossen werden, kann der Eingriffsabschnitt 23.1 in entsprechende Durchbrechungen 5 von jeweils zwei benachbarten Bauelementen 40 eingeführt werden und bewirkt als eine Art Abstandhalter oder Ausrichthilfe, dass die Bauelemente 40 der unteren Reihe 4' beim Befüllen mit Beton ihre Position behalten und nicht verrutschen. Dies kann insbesondere deshalb hilfreich sein, da beim Erstellen der unteren Reihe 4' die Bauelemente 40 noch nicht durch oberhalb angeordnete Bauelemente der oberen Reihe 4" in Position gehalten werden.

An dem der gelenkigen Verbindung mit dem Eingriffsabschnitt 23.1 gegenüberliegenden Ende des Distanzabschnittes 23.2 ist das im Wesentlichen U-förmig ausgebildete und einen ersten und zweiten Schenkelabschnitt 24.1, 24.2 sowie einen Stegabschnitt 24.3 aufweisende Befestigungsstück 24 angelenkt. Das dem Stegabschnitt 24.3 abgewandte freie Ende des zweiten Schenkelabschnittes 24.2 steht für die Befestigung des Spanngurtes 21 zur Verfügung.

Figur 8 zeigt einen Ausschnitt eines mit Siliergut befüllten Fahrsilos 1 im Bereich einer aus einer unteren und einer oberen Reihe 4', 4" von Bauelementen 40, 400 gebildeten seitlichen Begrenzungswand 3.1 in einer Schnittdarstellung. Das dargestellte Fahrsilo 1 weist neben der aus im Verband versetzt zueinander angeordneten Bauelementen 40, 400 bestehenden seitlichen Begrenzungswand 3.1 und einer Bodenplatte 2 sowohl eine mehrteilig ausgebildete Entwässerungsrinne 20 als auch eine Haltevorrichtung 22 für einen Spanngurt 21 zur Befestigung einer Abdeckplane 12 auf.

Die zur Bildung der oberen Reihe 4" verwendeten Bauelemente 400 sind an ihrer Oberseite mit einem abschließenden Deckel 17 ausgestattet (siehe auch Figur 5b) und weisen im oberen Bereich eine Auskragung 15 zur Außenseite der Begrenzungswand 3.1 hin auf, welche in den Luftraum oberhalb der Entwässerungsrinne 20 hineinragt. Die Abdeckplane 12 ist über die seitliche Begrenzungswand 3.1 geführt und durch Auflagerung von Sandsäcken, welche vorliegend mittels Aufkantungen der abschließenden Deckel 17 in Position gehalten werden, beschwert. Überstehende bzw. überschüssige Enden oder Teile der Abdeckplane können aufgerollt und als Rolle in dafür vorgesehene, an den Bauelementen 400 oder an den Deckeln 17 befestigbare Bügel oder Haken eingelegt werden.

Die aus einem Fußstück 23 und einem gelenkig damit verbundenen Befestigungsstück 24 bestehende Haltevorrichtung 22 für einen Spanngurt 21 ist an der Außenseite der Begrenzungswand 3.1 angeordnet und ist über einen Eingriff des Eingriffsabschnittes 23.1 des Fußstückes 23 vorzugsweise in Durchbrechungen 5 (in Figur 8 nicht zu sehen) zweier nebeneinanderliegender Bauelemente 40 der unteren Reihe 4' gehaltert. Das im Wesentlichen U-förmig ausgebildete und einen ersten und zweiten Schenkelabschnitt 24.1, 24.2 sowie einen Stegabschnitt 24.3 aufweisende Befestigungsstück 24 ist an den Distanzabschnitt 23.2 des Fußstückes 23 angelenkt. Durch seine im Wesentlichen U-förmige Ausbildung umgreift das Befestigungsstück 24 sowohl die Auskragung 15 der als obere Reihe 4" der seitlichen Begrenzungswand 3.1 verwendeten Bauelemente 400 als auch die als Rolle in Bügeln oder Haken eingelegten überschüssigen Teile der Abdeckplane 12. Durch die im Wesentlichen U-förmige Ausbildung des Befestigungsstücks 24 kann somit sichergestellt werden, dass sich das Befestigungsstück 24 und die obere Reihe 4" der seitlichen Begrenzungswand 3.1 mit den zusätzlich daran befestigten Elementen gegenseitig nicht räumlich behindern und dass der Spanngurt 21 sicher geführt ist. Der im Vergleich zum ersten Schenkelabschnitt 24.1 verlängerte zweite Schenkelabschnitt 24.2 ragt mit seinem dem Stegabschnitt 24.3 abgewandten freien Ende bis zu dem Silagehaufen, so dass der Spanngurt 21 über seine gesamte Länge anliegend an der auf dem Silagehaufen aufliegenden Abdeckplane 12 fixiert werden kann. Sollte im Lauf des Gärprozesses das Siliergut im Silagehaufen einsacken, kann sich die Haltevorrichtung 22 mittels der gelenkigen Verbindung zwischen Fuß- und Befestigungsstück 23, 24 optimal an die neue Geometrie des Silagehaufens anpassen und es ist lediglich ein Nachspannen des Spanngurtes 21 nötig, um die sichere Befestigung der Abdeckplane 12 aufrecht zu erhalten.

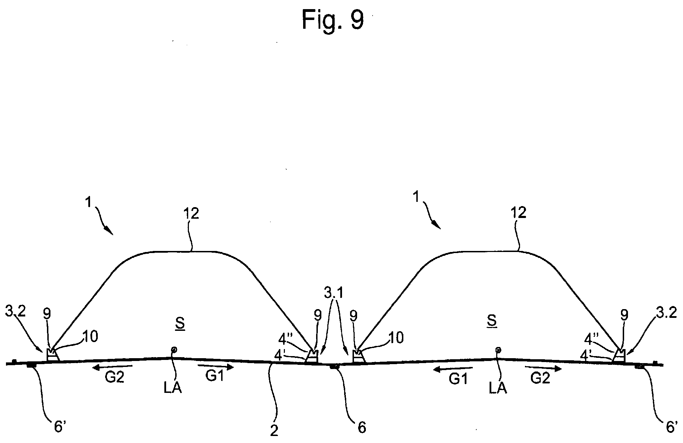

Figur 9 zeigt schematisch dargestellt einen Schnitt durch eine Fahrsilo-Anlage, bei der zwei Fahrsilos 1 nebeneinander angeordnet sind. Jedes Fahrsilo 1 besteht aus einer ersten und einer zweiten seitlichen Begrenzungswand 3.1, 3.2, welche auf einer gemeinsamen Bodenplatte 2 angeordnet sind und jeweils einen Einlagerungsbereich S abgrenzen. In der Bodenplatte 2 befinden sich insgesamt drei Abflussrinnen 6, 6', wobei eine Abflussrinne 6 zwischen den beiden Fahrsilos 1, nämlich außerhalb der Einlagerungsbereiche S zwischen den beiden ersten seitlichen Begrenzungswänden 3.1 der zwei Fahrsilos 1 angeordnet ist. Der Einlagerungsbereich S für die Silage weist in der Höhe weit über die Begrenzungswände 3.1 und 3.2 hinaus und wird auf der Oberseite durch eine Abdeckplane begrenzt. Die gemeinsame Bodenplatte 2 weist insgesamt vier Gefälle, nämlich für jedes Fahrsilo 1 ein erstes Gefälle G1 und ein zweites Gefälle G2 auf. Das erste Gefälle G1 erstreckt sich jeweils ausgehend von der Längsachse LA des Fahrsilos 1 in Richtung der ersten seitlichen Begrenzungswand 3.1 bis hin zu der Abflussrinne 6. Analog dazu erstreckt sich das zweite Gefälle G2 jeweils ausgehend von der Längsachse LA in Richtung der zweiten seitlichen Begrenzungswand 3.2 bis hin zu der Abflussrinne 6'.

Die seitlichen Begrenzungswände 3.1, 3.2 des dargestellten Ausführungsbeispiels bestehen jeweils aus zwei übereinander angeordneten Reihen von Bauelementen 4, nämlich aus einer im Beispiel direkt mit der Bodenplatte 2 in Kontakt stehenden unteren Reihe 4' und einer die seitlichen Begrenzungswände 3.1, 3.2 nach oben hin abschließenden oberen Reihe 4", welche im vorliegenden Beispiel aus einer Mehrzahl profilierter Abschlusselemente 10 besteht. Die längs aneinander gereihten Abschlusselemente 10 bilden in Längsrichtung einer jeden seitlichen Begrenzungswand 3.1, 3.2 eine Rinne 9 zum separaten Abführen von Niederschlagswasser aus. Die Bauelemente 4 der unteren Reihe 4' sind zum Zwecke einer höheren Haftreibung mit dem Untergrund an ihrer Unterseite aufgeraut.

Aus Sicherheitsaspekten kann bei einer Fahrsilo-Anlage, wie sie in der Figur 9 dargestellt ist, ein Seilsystem aufgespannt werden, in dem sich Personen des Arbeits- und/oder Wartungspersonals einklinken können. Die Seile können beispielsweise mittels Stützmasten befestigt und gespannt werden, wobei für jedes Fahrsilo 1 vorzugsweise zwei Stützmasten, nämlich jeweils ein Stützmasten im Bereich eines vorderen und hinteren stirnseitigen Endes des Fahrsilos 1 aufgestellt sind. Ebenso ist es möglich, dass die mittels der Haltevorrichtungen 22 befestigten Spanngurte 21 (siehe Figuren 7 und 8) zum Einklinken gängiger Abseilsicherungssysteme als Absturzsicherung für beschäftigte Personen verwendet werden.

### Bezugszeichenliste

- 1: Fahrsilo
- 2: Bodenplatte
- 3.1: erste seitliche Begrenzungswand
- 3.2: zweite seitliche Begrenzungswand
- 4, 40, 400: Bauelemente
- 4': untere Reihe
- 4": obere Reihe
- 4.1, 40.1, 400.1: Unterseite der Bauelemente
- 4.2, 40.2, 400.2: äußere Seitenfläche der Bauelemente
- 4.3, 40.3, 400.3: Oberseite der Bauelemente
- 4.4, 40.4, 400.4: innere Seitenfläche der Bauelemente
- 5: Durchbrechungen
- 6,6': Abflussrinne
- 7: noppenartige Ausbuchtungen
- 7': Deckfläche der noppenartigen Ausbuchtung
- 7.1: Einfüllöffnungen
- 7.2: Entlüftungs- und Kontrollöffnungen
- 8: Ausnehmungen
- 9: Rinne
- 10: profiliertes Abschlusselement
- 10.1: Unterseite des Abschlusselementes
- 10.2: äußere Seitenfläche des Abschlusselementes
- 10.3: Oberseite des Abschlusselementes
- 10.4: innere Seitenfläche des Abschlusselementes
- 11: Ausnehmung
- 12: Abdeckplane
- 13, 14: rinnen- oder nutenartige Vertiefung
- 15: Auskragung
- 16: Öffnung
- 17: Deckel
- 18: Einschubelement
- 19: Rinnenhaken
- 20: mehrteilige Entwässerungsrinne
- 21: Spanngurt
- 22: Haltevorrichtung für Spanngurte
- 23: Fußstück
- 23.1: Eingriffsabschnitt
- 23.2: Distanzabschnitt
- 24: Befestigungsstück
- 24.1: erster Schenkelabschnitt
- 24.2: zweiter Schenkelabschnitt
- 24.3: Stegabschnitt

- α: Winkel
- b: Breite eines Bauelementes
- b_{O}: obere Breite
- b_{U}: untere Breite
- G1: erstes Gefälle
- G2: zweites Gefälle
- h: Höhe eines Bauelementes
- HA: Hauptachse
- hₐ: äußere Höhe
- hᵢ: innere Höhe
- l: Länge eines Bauelementes
- LA: Längsachse
- S: Einlagerungsbereich für Silage

## Patentansprüche

1. Fahrsilo (1) bestehend aus einer Bodenplatte (2) und zumindest einer ersten und einer zweiten, einen Einlagerungsbereich (S) abgrenzenden, seitlichen Begrenzungswand (3.1, 3.2), wobei die Bodenplatte (2) wenigstens ein erstes, in Richtung der ersten seitlichen Begrenzungswand (3.1) von einem höheren Niveaupunkt zu einem tieferen Niveaupunkt verlaufendes Gefälle (G1) aufweist, wobei zumindest die erste seitliche Begrenzungswand (3.1) am tieferen Niveaupunkt des ersten Gefälles (G1) aus einer Mehrzahl im Verband versetzt zueinander angeordneter Bauelemente (4, 40, 400) besteht, wobei die eine seitliche Begrenzungswand (3.1, 3.2) bildenden Bauelemente (4, 40, 400) zumindest an ihrer dem Einlagerungsbereich (S) und der Bodenplatte (2) zugewandten Oberfläche aus einem säureresistenten, korrosionsbeständigen Material bestehen, **dadurch gekennzeichnet, dass** zumindest die zu der Bodenplatte (2) benachbart angeordneten Bauelemente (4, 40) auf ihrer der Bodenplatte (2) zugewandten Unterseite (4.1, 40.1) die gebildete seitliche Begrenzungswand (3.1, 3.2) durchquerende Durchbrechungen (5) für den Abfluss der in dem Einlagerungsbereich (S) gebildeten Silage-Sickersäfte aufweisen, die eine seitliche Begrenzungswand (3.1, 3.2) bildenden Bauelemente (4, 40, 400) an ihrer der Bodenplatte (2) abgewandten Oberseite (4.3, 40.3, 400.3) noppenartige Ausbuchtungen (7) aufweisen und/oder an ihrer der Oberseite (4.3, 40.3, 400.3) gegenüberliegenden Unterseite (4.1, 40.1, 400.1) Ausnehmungen (8) zur Aufnahme der noppenartigen Ausbuchtungen (7) eines unterhalb angeordneten Bauelementes (4, 40) aufweisen, wobei Anzahl, Anordnung und geometrische Ausbildung der Ausnehmungen (8) einen im Wesentlichen formschlüssigen Eingriff der noppenartigen Ausbuchtungen (7) in die Ausnehmungen (8) ermöglichen und dass die seitlichen Begrenzungswände (3.1, 3.2) jeweils aus mindestens zwei übereinander angeordneten Reihen von Bauelementen (4, 40, 400) bestehen, wobei eine untere Reihe (4') der Bauelemente (4, 40) zu der Bodenplatte (2) benachbart angeordnet ist.

2. Fahrsilo (1) nach Anspruch 1, **dadurch gekennzeichnet, dass** die seitlichen Begrenzungswände (3.1, 3.2) eine Höhe in einem Bereich von 0,5 m bis 3 m, bevorzugt in einem Bereich von 0,7 m bis 2,5 m, besonders bevorzugt von rund 2 m und insbesondere bevorzugt von rund 1 m aufweisen.

3. Fahrsilo (1) nach Anspruch 1 oder 2, **dadurch gekennzeichnet, dass** die erste und die zwei seitliche Begrenzungswand (3.1, 3.2) im Wesentlichen parallel zueinander verlaufen und dass beide seitlichen Begrenzungswände (3.1, 3.2) aus einer Mehrzahl im Verband versetzt zueinander angeordneter Bauelemente (4, 40, 400) bestehen.

4. Fahrsilo (1) nach Anspruch 3, **dadurch gekennzeichnet, dass** die Bodenplatte (2) zusätzlich ein zweites, in Richtung der zweiten seitlichen Begrenzungswand (3.2) von einem höheren Niveaupunkt zu einem tieferen Niveaupunkt verlaufendes zweites Gefälle (G2) aufweist.

5. Fahrsilo (1) nach einem der vorhergehenden Ansprüche, **dadurch gekennzeichnet, dass** zusätzlich eine dritte, stirnseitige Begrenzungswand vorgesehen ist, wobei die stirnseitige Begrenzungswand aus einer Mehrzahl im Verband versetzt zueinander angeordneter Bauelemente (4, 40, 400) besteht.

6. Fahrsilo (1) nach einem der vorhergehenden Ansprüche, **dadurch gekennzeichnet, dass** die Bauelemente (4, 40, 400) eine Länge (l) in einem Bereich von 0,5 m bis 2 m, bevorzugt eine Länge (I) von rund 1 m, eine Breite (b) in einem Bereich von 0,5 m bis 1,5 m, bevorzugt eine Breite (b) von rund 0,7 m und eine Höhe (h) in einem Bereich von 0,2 m bis 1,5 m, bevorzugt in einem Bereich von 0,3 m bis 1 m, besonders bevorzugt in einem Bereich von 0,3 m bis 0,7 m und insbesondere bevorzugt von rund 0,5 m aufweisen.

7. Fahrsilo (1) nach einem der vorhergehenden Ansprüche, **dadurch gekennzeichnet, dass** die Bauelemente (4, 40, 400) einen im Wesentlichen trapezförmigen Querschnitt aufweisen, wobei die dem Einlagerungsbereich (S) abgewandte äußere Seitenfläche (4.2, 40.2, 400.2) näherungsweise senkrecht zur Unterseite (4.1, 40.1, 400.1) angeordnet ist und die dem Einlagerungsbereich (S) zugewandte innere Seitenfläche (4.4, 40.4, 400.4) mit der Unterseite (4.1, 40.1, 400.1) vorzugsweise einen Winkel (α) in einem Bereich von 50° bis 75°, besonders bevorzugt einen Winkel in einem Bereich von 55° bis 67°, insbesondere bevorzugt einen Winkel von rund 57° einschließt.

8. Fahrsilo (1) nach einem der vorhergehenden Ansprüche, **dadurch gekennzeichnet, dass** die Bodenplatte (2) außerhalb des Einlagerungsbereiches (S) wenigstens eine Abflussrinne (6, 6') für die aus dem Einlagerungsbereich (S) abgeführten Silage-Sickersäfte aufweist.

9. Fahrsilo (1) nach einem der vorhergehenden Ansprüche, **dadurch gekennzeichnet, dass** ein separates Abflusssystem zum Abführen von Niederschlagswasser vorgesehen ist.

10. Fahrsilo (1) nach Anspruch 9, **dadurch gekennzeichnet, dass** zum Abführen von Niederschlagswasser eine mehrteilige Entwässerungsrinne vorgesehen ist, wobei die mehrteilige Entwässerungsrinne (20) über Befestigungselemente an einer aus einer Mehrzahl im Verband versetzt zueinander angeordneter Bauelemente (4, 40, 400) gebildeten seitlichen Begrenzungswand (3.1, 3.2) befestigbar ist.

11. Fahrsilo (1) nach Anspruch 9, **dadurch gekennzeichnet, dass** die aus einer Mehrzahl im Verband versetzt zueinander angeordneter Bauelemente (4, 40) gebildeten seitlichen Begrenzungswände (3.1, 3.2) zum Abführen von Niederschlagswasser ausgebildet und eingerichtet sind, und zwar derart, dass eine obere, die Begrenzungswand (3.1, 3.2) nach oben abschließende Reihe (4") aus mehreren, aneinander anschließenden, profilierten Abschlusselementen (10) besteht und die obere Reihe (4") eine Entwässerungsrinne (9) ausbildet.

12. Fahrsilo (1) nach Anspruch 11, **dadurch gekennzeichnet, dass** jedes profilierte Abschlusselement (10) an seiner Oberseite (10.3) eine sich längs erstreckende nutförmige Ausnehmung (11) aufweist, wobei die längliche, nutförmige Ausnehmung in Gebrauchsstellung des Abschlusselementes (10) in Richtung der seitlichen Begrenzungswand (3.1, 3.2) verläuft.

13. Fahrsilo (1) nach einem der vorhergehenden Ansprüche, **dadurch gekennzeichnet, dass** zusätzlich eine Haltevorrichtung (22) für Spanngurte (21) zur Befestigung einer Abdeckplane (12) vorgesehen ist.

## Claims

1. A trench silo (1) consisting of a base plate (2) and at least a first and a second lateral boundary wall (3.1, 3.2) delimiting a storage area (S), wherein the base plate (2) has at least a first slope (G1) running in the direction of the first lateral boundary wall (3.1) from a higher level point to a deeper level point, wherein at least the first lateral boundary wall (3.1) at the deeper level point of the first slope (G1) consists of a plurality of structural elements (4, 40, 400) arranged offset in association with one another, wherein the structural elements (4, 40, 400) forming a lateral boundary wall (3.1, 3.2) consist, at least on their surface facing the storage area (S) and the base plate (2), of an acid-resistant, corrosion-resistant material, **characterized in that** at least the structural elements (4, 40) arranged adjacent to the base plate (2) have on their bottom side (4.1, 40.1) facing the base plate (2) openings (5) passing through the formed lateral boundary wall (3.1, 3.2) for the outflow of the silage effluent formed in the storage area (S), the structural elements (4, 40, 400) forming a lateral boundary wall (3.1, 3.2) have nub-like convexities (7) on their upper side (4.3, 40.3, 400.3) facing away from the base plate (2) and/or have recesses (8) on their bottom side (4.1, 40.1, 400.1) lying opposite the upper side (4.3, 40.3, 400.3) to receive the nub-like convexities (7) of a structural element (4, 40) arranged beneath, wherein the number, arrangement and geometric configuration of the recesses (8) enable a substantially form-fitting engagement of the nub-like convexities (7) into the recesses (8) and that the lateral boundary walls (3.1, 3.2) consist respectively of at least two rows of structural elements (4, 40, 400) arranged over one another, wherein a lower row (4') of the structural elements (4, 40) is arranged adjacent to the base plate (2).

2. The trench silo (1) according to claim 1, **characterized in that** the lateral boundary walls (3.1, 3.2) have a height in a range of 0.5 m to 3 m, preferably in a range of 0.7 m to 2.5 m, particularly preferably of around 2 m and in particular preferably of around 1 m.

3. The trench silo (1) according to claim 1 or 2, **characterized in that** the first and the second lateral boundary wall (3.1, 3.2) run substantially parallel to one another and that both lateral boundary walls (3.1, 3.2) consist of a plurality of structural elements (4, 40, 400) arranged offset in association with one another.

4. The trench silo (1) according to claim 3, **characterized in that** the base plate (2) additionally comprises a second slope (G2) running in the direction of the second lateral boundary wall (3.2) from a higher level point to a deeper level point.

5. The trench silo (1) according to one of the preceding claims, **characterized in that** in addition a third face-side boundary wall is provided, wherein the face-side boundary wall consists of a plurality of structural elements (4, 40, 400) arranged offset in association with one another.

6. The trench silo (1) according to one of the preceding claims, **characterized in that** the structural elements (4, 40, 400) have a length (l) in a range of 0.5 m to 2 m, preferably a length (l) of around 1 m, a width (b) in a range of 0.5 m to 1.5 m, preferably a width (b) of around 0.7 m, and a height (h) in a range of 0.2 m to 1.5 m, preferably in a range of 0.3 m to 1 m, particularly preferably in a range of 0.3 m to 0.7 m and in particular of around 0.5 m.

7. The trench silo (1) according to one of the preceding claims, **characterized in that** the structural elements (4, 40, 400) have a substantially trapezoidal cross-section, wherein the outer lateral face (4.2, 40.2, 400.2) facing away from the storage area (S) is arranged approximately perpendicularly to the bottom side (4.1, 40.1, 400.1) and the inner lateral face (4.4, 40.4, 400.4) facing the storage area (S) forms with the bottom side (4.1, 40.1, 400.1) preferably an angle (α) in a range of 50° to 75°, particularly preferably an angle in a range of 55° to 67°, in particular preferably an angle of around 57°.

8. The trench silo (1) according to one of the preceding claims, **characterized in that** the base plate (2) outside the storage area (S) has at least one gutter (6, 6') for the silage effluent which is conveyed away from the storage area (S).

9. The trench silo (1) according to one of the preceding claims, **characterized in that** a separate outflow system is provided for discharging rainwater.

10. The trench silo (1) according to claim 9, **characterized in that** a multipart drainage channel is provided for discharging rainwater, wherein the multipart drainage channel (20) is able to be fastened by means of fastening elements to a lateral boundary wall (3.1, 3.2) formed from a plurality of structural elements (4, 40, 400) arranged offset in association with one another.

11. The trench silo (1) according to claim 9, **characterized in that** the lateral boundary walls (3.1, 3.2) formed from a plurality of structural elements (4, 40) arranged offset in association with one another are designed and arranged for discharging rainwater, and namely such that an upper row (4"), upwardly closing off the boundary wall (3.1, 3.2), consists of several profiled closure elements (10), adjoining one another, and the upper row (4") forms a drainage channel (9).

12. The trench silo (1) according to claim 11, **characterized in that** each profiled closure element (10) has on its upper side (10.3) a longitudinally extending groove-shaped recess (11), wherein the elongated, groove-shaped recess, in the position of use of the closure element (10), runs in the direction of the lateral boundary wall (3.1, 3.2).

13. The trench silo (1) according to one of the preceding claims, **characterized in that** in addition a holding device (22) is provided for tension belts (21) for fastening a tarpaulin (12).

## Revendications

1. Silo-couloir (1) composé d'une plaque de fond (2) et d'au moins une première et une deuxième parois de délimitation latérales (3.1, 3.2) délimitant une zone de stockage (S), sachant que la plaque de fond (2) présente au moins une première pente (G1) allant d'un point de niveau plus élevé à un point de niveau plus bas dans le sens de la première paroi de délimitation latérale (3.1), sachant qu'au moins la première paroi de délimitation latérale (3.1) au point de niveau plus bas de la première pente (G1) est composée d'une pluralité d'éléments de construction (4, 40, 400) disposés décalés les uns des autres dans l'assemblage, sachant que les éléments de construction (4, 40, 400) formant une paroi de délimitation latérale (3.1, 3.2) sont composés au moins d'un matériau résistant aux acides et à la corrosion sur leur face supérieure tournée vers la zone de stockage (S) et la plaque de fond (2), **caractérisé en ce qu'**au moins les éléments de construction (4, 40) disposés dans le voisinage de la plaque de fond (2) présentent sur leur sous-face (4.1, 40.1) tournée vers la plaque de fond (2), des percées (5) traversant la paroi de délimitation (3.1, 3.2) latérale formée pour l'évacuation des jus d'écoulement d'ensilage formés dans la zone de stockage (S), les éléments de construction (4, 40, 400) formant une paroi de délimitation latérale (3.1, 3.2) présentent sur leur face supérieure (4.3, 40.3, 400.3) détournée de la plaque de fond (2), des bombements en forme de boutons (7) et/ou sur leur sous-face (4.1, 40.1, 400.1) face à la face supérieure (4.3, 40.3, 400.3), des évidements (8) pour recevoir les bombements en forme de boutons (7) d'un élément de construction (4, 40) disposé dessous, sachant que le nombre, l'agencement et la formation géométrique des évidements (8) permettent un engagement essentiellement par complémentarité de forme des bombements en forme de boutons (7) dans les évidements (8) et que les parois de délimitation latérales (3.1, 3.2) sont respectivement composées d'au moins deux rangées disposées l'une sur l'autre d'éléments de construction (4, 40, 400), sachant qu'une rangée inférieure (4') des éléments de construction (4, 40) est disposée dans le voisinage de la plaque de fond (2).

2. Silo-couloir (1) selon la revendication 1, **caractérisé en ce que** les parois de délimitation latérales (3.1, 3.2) présentent une hauteur située dans une plage de 0,5 m à 3 m, de préférence dans une plage de 0,7 m à 2,5 m, de manière particulièrement préférée d'environ 2 m et de préférence en particulier d'environ 1 m.

3. Silo-couloir (1) selon la revendication 1 ou 2, **caractérisé en ce que** les première et deuxième parois de délimitation latérales (3.1, 3.2) sont essentiellement parallèles entre elles et que les deux parois de délimitation latérales (3.1, 3.2) sont composées d'une pluralité d'éléments de construction (4, 40, 400) disposés décalés les uns des autres dans l'assemblage.

4. Silo-couloir (1) selon la revendication 3, **caractérisé en ce que** la plaque de fond (2) présente en outre une seconde pente (G2) allant d'un point de niveau plus élevé à un point de niveau plus bas dans le sens de la deuxième paroi de délimitation latérale (3.2).

5. Silo-couloir (1) selon l'une des revendications précédentes, **caractérisé en ce qu'**en outre, une troisième paroi de délimitation avant est prévue, sachant que la paroi de délimitation avant est composée d'une pluralité d'éléments de construction (4, 40, 400) disposés décalés les uns des autres dans l'assemblage.

6. Silo-couloir (1) selon l'une des revendications précédentes, **caractérisé en ce que** les éléments de construction (4, 40, 400) présentent une longueur (l) dans une plage de 0,5 m à 2 m, de préférence une longueur (l) d'environ 1 m, une largeur (b) dans une plage de 0,5 m à 1,5 m, de préférence une largeur (b) d'environ 0,7 m, et une hauteur (h) dans une plage de 0,2 m à 1,5 m, de préférence dans une plage de 0,3 m à 1 m, particulièrement de préférence dans une plage de 0,3 m à 0,7 m et en particulier de préférence d'environ 0,5 m.

7. Silo-couloir (1) selon l'une des revendications précédentes, **caractérisé en ce que** les éléments de construction (4, 40, 400) présentent une section transversale essentiellement trapézoïdale, sachant que la face latérale extérieure (4.2, 40.2, 400.2) détournée de la zone de stockage (S) est disposée approximativement à la verticale de la sous-face (4.1, 40.1, 400.1), et la face latérale intérieure (4.4, 40.4, 400.4) tournée de la zone de stockage (S) inclut avec la sous-face (4.1, 40.1, 400.1) de préférence un angle (α) dans une plage de 50° à 75°, particulièrement de préférence un angle dans une plage de 55° à 67°, en particulier de préférence un angle d'environ 57°.

8. Silo-couloir (1) selon l'une des revendications précédentes, **caractérisé en ce que** la plaque de fond (2) présente en-dehors de la zone de stockage (S), au moins une rigole (6, 6') pour les jus d'écoulement d'ensilage évacués de la zone de stockage (S).

9. Silo-couloir (1) selon l'une des revendications précédentes, **caractérisé en ce qu'**un système d'écoulement séparé est prévu pour évacuer les eaux de précipitations.

10. Silo-couloir (1) selon la revendication 9, **caractérisé en ce que** pour évacuer les eaux de précipitations, une rigole d'évacuation en plusieurs parties est prévue, sachant que la rigole d'évacuation en plusieurs parties (20) peut être fixée par le biais d'éléments de fixation, sur une paroi de délimitation latérale (3.1, 3.2) formée par une pluralité d'éléments de construction (4, 40, 400) disposés décalés les uns des autres dans l'assemblage.

11. Silo-couloir (1) selon la revendication 9, **caractérisé en ce que** la paroi de délimitation latérale (3.1, 3.2) formée d'une pluralité d'éléments de construction (4, 40) disposés décalés les uns des autres dans l'assemblage, est conçue et équipée pour évacuer les eaux de précipitations et ce de telle façon qu'une rangée (4") supérieure fermant la paroi de délimitation (3.1, 3.2) vers le haut composée d'une pluralité d'éléments d'extrémité (10) profilés se raccordant les uns contre les autres est formée, et que la rangée supérieure (4") forme une rigole d'évacuation (9).

12. Silo-couloir (1) selon la revendication 11, **caractérisé en ce que** chaque élément d'extrémité (10) profilé présente un évidement (11) en forme de rainure longitudinale sur sa face supérieure (10.3), sachant que l'évidement en forme de rainure longitudinale passe en direction de la paroi de délimitation (3.1, 3.2) latérale dans la position d'utilisation de l'élément d'extrémité (10).

13. Silo-couloir (1) selon l'une des revendications précédentes, **caractérisé en ce qu'**en outre, il est prévu un dispositif de fixation (22) pour des courroies de serrage (21) destinées à fixer une bâche de couverture (12).
